# EUROPÄISCHE PATENTANMELDUNG

(11) **EP 2 991 013 A1**
(43) Veröffentlichungstag der Anmeldung: **02.03.2016**
(21) Anmeldenummer: 14182598.4
(22) Anmeldetag: 28.08.2014
(51) Int. Cl.: G06Q 20/02, G06Q 20/10, G06Q 20/12

(54) **Verfahren und Vorrichtung zur zumindest teilweisen Steuerung der Kommunikation in einem Transaktionssystem**

(71) Anmelder: WeMaCon Limited, 82031 Grünwald (DE)
(72) Erfinder: Die Erfindernennung liegt noch nicht vor
(74) Vertreter: Keilitz, Wolfgang

(57) **Zusammenfassung**

Es wird unter anderem offenbart ein Verfahren, umfassend:
- Empfangen (401, 501) zumindest eines Teils von ersten Routinginformationen an einer Steuerungsvorrichtung (10), wobei die ersten Routinginformationen ein Sendekonto einer ersten Transaktion identifizieren, und wobei der empfangene Teil der ersten Routinginformationen mit einer ersten Entität (21) eines Transaktionssystems (2) assoziiert ist, und
- Bestimmen (402, 502) von zweiten Routinginformationen derart zumindest teilweise in Abhängigkeit des empfangenen Teils der ersten Routinginformationen durch die Steuerungsvorrichtung (10), dass die zweiten Routinginformationen ebenfalls mit der ersten Entität (21) des Transaktionssystems (2) assoziiert sind, wobei die zweiten Routinginformationen ein Empfangskonto der ersten Transaktion identifizieren, und
- Bereitstellen (403, 503), durch die Steuerungsvorrichtung (10), der zweiten Routinginformationen zum Ausführen der ersten Transaktion.

## Beschreibung

### Gebiet der Erfindung

Beispielhafte Ausführungsformen der Erfindung betreffen ein Verfahren und eine Vorrichtung zur zumindest teilweisen Steuerung der Kommunikation in einem Transaktionssystem.

### Hintergrund der Erfindung

Im Stand der Technik sind Transaktionssysteme wie elektronische Zahlungsverkehrssysteme bekannt. Ein Transaktionssystem umfasst eine oder mehrere Entitäten zum zumindest teilweisen Ausführen von Transaktionen in dem Transaktionssystem. Das Ausführen einer Transaktion umfasst beispielsweise das Verarbeiten der Transaktionsinformationen durch eine oder mehrere Entitäten des Transaktionssystems. Wenn das Sendekonto und das Empfangskonto einer Transaktion beispielsweise mit verschiedenen Entitäten des Transaktionssystems assoziiert sind, umfasst das Ausführen einer Transaktion ferner beispielsweise die Kommunikation zwischen den verschiedenen Entitäten des Transaktionssystems und/oder die Kommunikation zwischen den verschiedenen Entitäten des Transaktionssystems und einer Clearingentität des Transaktionssystems. Diese Kommunikation in dem Transaktionssystem führt zu einer hohen Auslastung der Ressourcen des Transaktionssystems und verlängert die Ausführungszeit zur Ausführung einer Transaktion in dem Transaktionssystem. Ferner umfasst das Ausführen einer Transaktion, an der verschiedene Entitäten des Transaktionssystems beteiligt sind, die Durchführung von zusätzlichen Schritten durch jede der an der Transaktion beteiligten Entitäten wie beispielsweise die Verarbeitung von Quittungen, die Erzeugung und Übertragung von Transaktionsdateien, die Berücksichtigung von Transaktionen für die Kontendisposition, die Eindeckung von Konten mit ausreichend Liquidität und/oder die Berücksichtigung bei gesetzlich vorgeschriebenen Zahlungsverkehrsstatistiken. Zum Beispiel muss in diesem Fall sowohl die mit dem Sendekonto assoziierte Entität des Transaktionssystems als auch die mit dem Empfangskonto assoziierte Entität des Transaktionssystems zusätzliche Sammelbuchungen, Sammelverrechnungsbuchungen und/oder Einzelbuchungen durchführen (z.B. in der Hauptbuchhaltung und/oder in der Nebenbuchhaltung). Diese zusätzlichen Schritte führen ebenfalls zu einer hohen Auslastung der Ressourcen des Transaktionssystems wie z.B. der verschiedenen Entitäten.

### Zusammenfassung einiger beispielhafter Ausführungsformen der Erfindung

Die vorliegende Erfindung hat sich daher unter anderem die Aufgabe gestellt, diese Probleme zu überwinden.

Gemäß der Erfindung wird ein Verfahren offenbart, das folgendes umfasst:
- Empfangen zumindest eines Teils von ersten Routinginformationen an einer Steuerungsvorrichtung, wobei die ersten Routinginformationen ein Sendekonto einer ersten Transaktion identifizieren, und wobei der empfangene Teil der ersten Routinginformationen mit einer ersten Entität eines Transaktionssystems assoziiert ist, und
- Bestimmen von zweiten Routinginformationen derart zumindest teilweise in Abhängigkeit des empfangenen Teils der ersten Routinginformationen durch die Steuerungsvorrichtung, dass die zweiten Routinginformationen ebenfalls mit der ersten Entität des Transaktionssystems assoziiert sind, wobei die zweiten Routinginformationen ein Empfangskonto der ersten Transaktion identifizieren, und
- Bereitstellen, durch die Steuerungsvorrichtung, der zweiten Routinginformationen zum Ausführen der ersten Transaktion.

Zum Beispiel ist das erfindungsgemäße Verfahren ein Verfahren zur zumindest teilweisen Steuerung der Kommunikation in einem Transaktionssystem.

Gemäß der Erfindung wird des Weiteren eine Steuerungsvorrichtung offenbart, die ein oder mehrere Mittel eingerichtet zur zumindest teilweisen Ausführung des erfindungsgemäßen Verfahrens oder jeweilige Mittel zur Ausführung der Schritte des erfindungsgemäßen Verfahrens umfasst. Zum Beispiel sind die Mittel der erfindungsgemäßen Steuerungsvorrichtung eingerichtet, das erfindungsgemäße Verfahren oder dessen Schritte zumindest teilweise auszuführen und/oder zumindest teilweise zu steuern. Ein oder mehrere der Schritte des erfindungsgemäßen Verfahrens können auch durch die gleichen Mittel ausgeführt und/oder gesteuert werden.

Zum Beispiel ist die erfindungsgemäße Steuerungsvorrichtung eine Steuerungsvorrichtung zur zumindest teilweisen Steuerung der Kommunikation in einem Transaktionssystem.

Zum Beispiel umfasst die erfindungsgemäße Steuerungsvorrichtung zumindest einen Prozessor und zumindest einen Speicher, der Programmanweisungen beinhaltet, wobei der Speicher und die Programmanweisungen eingerichtet sind, die Vorrichtung mit dem zumindest einen Prozessor dazu zu veranlassen, das erfindungsgemäße Verfahren zumindest teilweise auszuführen und/oder zu steuern. Dabei können entweder die Schritte des erfindungsgemäßen Verfahrens durch die erfindungsgemäße Steuerungsvorrichtung gesteuert oder ausgeführt werden, oder ein oder mehrere Schritte des erfindungsgemäßen Verfahrens werden durch die erfindungsgemäße Steuerungsvorrichtung gesteuert und ein oder mehrere Schritte des erfindungsgemäßen Verfahrens werden durch die erfindungsgemäße Steuerungsvorrichtung ausgeführt.

Zum Beispiel umfasst die erfindungsgemäße Steuerungsvorrichtung zumindest einen Prozessor und zumindest einen Speicher, der Programmanweisungen beinhaltet, wobei der Speicher und die Programmanweisungen eingerichtet sind, die Vorrichtung gemeinsam mit dem zumindest einen Prozessor dazu zu veranlassen, die folgenden Schritte auszuführen und/oder zu steuern:
- Empfangen zumindest eines Teils von ersten Routinginformationen, wobei die ersten Routinginformationen ein Sendekonto einer ersten Transaktion identifizieren, und wobei der empfangene Teil der ersten Routinginformationen mit einer ersten Entität eines Transaktionssystems assoziiert ist, und
- Bestimmen von zweiten Routinginformationen derart zumindest teilweise in Abhängigkeit des empfangenen Teils der ersten Routinginformationen, dass die zweiten Routinginformationen ebenfalls mit der ersten Entität des Transaktionssystems assoziiert sind, wobei die zweiten Routinginformationen ein Empfangskonto der ersten Transaktion identifizieren, und
- Bereitstellen der zweiten Routinginformationen zum Ausführen der ersten Transaktion.

Unter einem Prozessor sollen beispielsweise Kontrolleinheiten, Mikroprozessoren, Mikrokontrolleinheiten wie Mikrocontroller, digitale Signal prozessoren (DSP), Anwendungsspezifische Integrierte Schaltungen (ASICs) oder Field Programmable Gate Arrays (FPGAs) verstanden werden. Der Speicher, der die Programmanweisungen beinhaltet, kann beispielsweise Teil des Prozessors sein, beispielsweise ein (nicht-flüchtiger oder flüchtiger) Programmspeicher und/oder Arbeitsspeicher des Prozessors oder ein Teil davon. Die Programmanweisungen sind beispielsweise Programmanweisungen des unten beschriebenen erfindungsgemäßen Computerprogramms.

Zum Beispiel umfasst die erfindungsgemäße Steuerungsvorrichtung ferner eine Netzwerkschnittstelle, die eingerichtet ist, Informationen über eine oder mehrere Netzwerkverbindungen zu senden und/oder zu empfangen.

Gemäß der Erfindung wird des Weiteren ein System offenbart, das folgendes umfasst:
- eine erfindungsgemäße Steuerungsvorrichtung, und
- eine erste Entität eines Transaktionssystems.

Zum Beispiel ist die erste Entität des erfindungsgemäßen Systems die erste Entität des erfindungsgemäßen Verfahrens.

Gemäß der Erfindung wird des Weiteren ein Computerprogramm offenbart, das Programmanweisungen umfasst, die einen Prozessor zur Ausführung und/oder Steuerung des erfindungsgemäßen Verfahrens veranlassen, wenn das Computerprogramm auf dem Prozessor läuft.

Das erfindungsgemäße Computerprogramm kann beispielsweise über ein Netzwerk wie das Internet, ein Telefon- oder Mobilfunknetz und/oder ein lokales Netzwerk verteilbar sein. Das erfindungsgemäße Computerprogramm kann zumindest teilweise Software und/oder Firmware eines Prozessors sein. Es kann gleichermaßen zumindest teilweise als Hardware implementiert sein. Das erfindungsgemäße Computerprogramm kann beispielsweise auf einem computerlesbaren Speichermedium gespeichert sein, z.B. einem berührbaren, magnetischen, elektrischen, elektromagnetischen, optischen und/oder andersartigen Speichermedium. Das Speichermedium kann beispielsweise Teil des Prozessors sein, beispielsweise ein (nicht-flüchtiger oder flüchtiger) Programmspeicher und/oder Arbeitsspeicher des Prozessors oder ein Teil davon.

Gemäß der Erfindung wird des Weiteren eine Verwendung des erfindungsgemäßen Verfahrens und/oder der erfindungsgemäßen Servervorrichtung zum zur zumindest teilweisen Steuerung der Kommunikation in einem Transaktionssystem bei der Ausführung der ersten Transaktion in dem Transaktionssystem.

Im Folgenden werden die Eigenschaften des erfindungsgemäßen Verfahrens, der erfindungsgemäßen Steuerungsvorrichtung, des erfindungsgemäßen Systems des erfindungsgemäßen Computerprogramms und der erfindungsgemäßen Verwendung - teilweise beispielhaft - beschrieben.

Unter einer Transaktion soll vorliegend beispielsweise eine Zahlungstransaktion wie eine bargeldlose Übertragung von Zahlungsmitteln von einem Sendekonto zu einem Empfangskonto verstanden werden. Ein Beispiel für eine Transaktion ist eine Überweisung und/oder eine Lastschrift, beispielsweise eine DTA-Überweisung (Datenträgeraustauschverfahren, DTA), eine DTA-Lastschrift, eine SEPA-Überweisung (Single Euro Payments Area, SEPA) und/oder eine SEPA-Lastschrift.

Die erste Transaktion kann beispielsweise zum Begleichen einer Zahlungsforderung zwischen einem Transaktionssender (z.B. einem Käufer) und einem Transaktionsempfänger (z.B. einem Verkäufer) dienen (z.B. eine Bezahltransaktion). In diesem Fall ist der Transaktionssender beispielsweise Besitzer/Eigentümer des Sendekontos der ersten Transaktion und der Transaktionsempfänger ist Besitzer/Eigentümer des Empfangskontos der ersten Transaktion. Unter einem Transaktionssender soll vorliegend beispielsweise eine natürliche oder juristische Person verstanden werden, die durch eine Transaktion belastet wird. Unter einem Transaktionsempfänger soll vorliegend beispielsweise eine natürliche oder juristische Person verstanden werden, die durch eine Transaktion begünstigt wird.

Unter einem Transaktionssystem soll vorliegend beispielsweise ein Kommunikationsnetz und/oder ein Kommunikationssystem zur Kommunikation von Transaktionsinformationen zwischen einer oder mehreren Entitäten des Transaktionssystems verstanden werden. Zum Beispiel ist ein Transaktionssystem ein Zahlungsverkehrssystem wie ein elektronisches Zahlungsverkehrssystem. Beispiele für Transaktionssysteme sind das Zahlungsverkehrssystem TARGET2 (Trans-European Automated Realtime Gross Settlement Express Transfer System, TARGET), die von der EBA CLEARING (European Banking Association, EBA) betriebenen Zahlungsverkehrssysteme EUR01, STEP1, STEP2 und MyBank, sowie das SWIFT-Netz (Society for Worldwide Interbank Financial Telecommunication, SWIFT). Ein Beispiel für ein Kommunikationsprotokoll zur Übermittlung von Informationen (z.B. von Transaktionsinformationen) in einem Transaktionssystem ist das das EBICS-Protokoll (Electronic Banking Internet Communication Standard, EBICS).

Unter einer Netzwerkverbindung soll vorliegend beispielsweise eine Verbindung über ein Netzwerk verstanden werden, über die Informationen direkt oder indirekt von einer Entität zu einer anderen Entität übertragen werden können. Die Informationen können in dem Netzwerk zum Beispiel als Nutzinformationen einer Nachricht und/oder eines Datenpakets übertragen werden. Die Übertragung von Informationen in einem Netzwerk kann beispielsweise verbindungslos oder verbindungsorientiert erfolgen. Beispiele für ein Netzwerk sind ein lokales Netzwerk (LAN) wie ein Ethernet-Netzwerk oder ein IEEE 802-Netzwerk, ein Weitverkehrsnetzwerk (WAN), ein globales Netzwerk (global area network, GAN), ein drahtloses Netzwerk, ein drahtgebundenes Netzwerk, ein Mobilfunknetzwerk, ein Telefonnetzwerk und/oder das Internet. Die oben genannten Transaktionssysteme beruhen beispielsweise auf Verbindungen über ein oder mehrerer solcher Netzwerke. Die Entitäten des Transaktionssystems sind beispielsweise über eine oder mehrere Netzwerkverbindungen miteinander verbunden. Die erfindungsgemäße Steuervorrichtung ist beispielsweise über eine oder mehrere Netzwerkverbindung mit der ersten Entität des Transaktionssystems und/oder weiteren Entitäten des Transaktionssystems (z.B. der unten beschriebenen zweiten Entität des Transaktionssystems) verbunden.

Zum Beispiel umfasst ein Transaktionssystem eine oder mehrere Entitäten zum zumindest teilweisen Ausführen von Transaktionen in dem Transaktionssystem. Das Ausführen einer Transaktion umfasst beispielsweise das Verarbeiten der Transaktionsinformationen durch eine oder mehrere Entitäten des Transaktionssystems (z.B. zumindest durch eine mit dem Sendekonto der Transaktion assoziierten Entität des Transaktionssystems und eine mit dem Empfangskonto der Transaktion assoziierten Entität des Transaktionssystems). Wenn das Sendekonto und das Empfangskonto einer Transaktion beispielsweise mit verschiedenen Entitäten des Transaktionssystems assoziiert sind, umfasst das Ausführen einer Transaktion ferner beispielsweise die Kommunikation von Transaktionsinformationen zwischen den verschiedenen Entitäten des Transaktionssystems (z.B. zwischen einer mit dem Sendekonto der Transaktion assoziierten Entität des Transaktionssystems und einer mit dem Empfangskonto der Transaktion assoziierten Entität des Transaktionssystems) und/oder die Kommunikation von Transaktionsinformationen zwischen den verschiedenen Entitäten des Transaktionssystems und einer Clearingentität des Transaktionssystems (z.B. zwischen einer mit dem Sendekonto der Transaktion assoziierten Entität des Transaktionssystems und einer Clearingentität des Transaktionssystems sowie zwischen einer mit dem Empfangskonto der Transaktion assoziierten Entität des Transaktionssystems und der Clearingentität des Transaktionssystems).

Eine Clearingentität ist beispielsweise eingerichtet, eine oder mehrere Transaktionen zwischen verschiedenen Entitäten des Transaktionssystems abzuwickeln. Zum Beispiel ist eine Clearingentität eingerichtet, Transaktionsinformationen von den verschiedenen Entitäten des Transaktionssystems zu empfangen und an die verschiedene Entitäten des Transaktionssystems zu senden und/oder Transaktionsinformationen zu verarbeiten. Eine Clearingentität wird beispielsweise von der Deutschen Bundesbank als Clearingstelle im TARGET2-System bereitgestellt. Die Deutsche Bundesbank ist beispielsweise als Zentralbank ein nationaler entry-point für SEPA-Transaktionen. Die Verrechnung solcher Transaktionen zwischen verschiedenen Banken findet auf der TARGET2-Plattform statt. Die oben erwähnte EBA CLEARING ist beispielsweise eine Clearing-Infrastruktur, die die SEPA-Erreichbarkeit der EBA-Mitgliedsbanken SEPA-weit sicherstellt. Die Verarbeitungszeiten der Clearingentitäten können beispielsweise auf bestimmte Zeitfenster (z.B. nur werktags von 07:00 Uhr bis 11:00) beschränkt sein, so dass Transaktionen außerhalb eines solchen Zeitfensters von den Clearingentitäten nicht abgewickelt werden. Dies kann zu einer Verzögerung der Ausführung einer Transaktion führen, an der verschiedene Entitäten des Transaktionssystems beteiligt sind.

Eine Entität eines Transaktionssystems ist beispielsweise eingerichtet, Transaktionsinformationen für die mit der Entität assoziierten Konten über das Transaktionssystem zu senden und zu empfangen und/oder Transaktionsinformationen für die mit der Entität assoziierten Konten zu verarbeiten. Eine Entität eines Transaktionssystems ist ferner beispielsweise eingerichtet, die mit der Entität assoziierten Konten zumindest teilweise zu verwalten. Mit anderen Worten soll vorliegend ein Konto beispielsweise als mit einer Entität des Transaktionssystems assoziiert verstanden werden, wenn die Entität eingerichtet ist, Transaktionsinformationen für die mit der Entität assoziierten Konten über das Transaktionssystem zu senden und zu empfangen und/oder Transaktionsinformationen für die mit der Entität assoziierten Konten zu verarbeiten und/oder die mit der Entität assoziierten Konten zu verwalten.

Es ist zum Beispiel denkbar, dass eine Bank oder eine Gruppe von Banken eine Entität des Transaktionssystems für die von der Bank oder der Gruppe von Banken geführten Konten bereitstellt. In diesem Fall ist beispielsweise jedes von der Bank oder einer Bank der Gruppe von Banken geführtes Konto mit derselben Entität eines Transaktionssystems assoziiert ist. Ein Gruppe von Banken kann beispielsweise mehrere oder alle Banken einer Institutsgruppe wie dem Sparkassenverband umfassen.

Eine Entität eines Transaktionssystems und/oder eine Clearingentität eines Transaktionssystems umfasst beispielsweise eine oder mehrere Datenverarbeitungsvorrichtungen, insbesondere eine oder mehrere Servervorrichtungen (z.B. eine oder mehrere Transaktionsservervorrichtungen und eine oder mehrere Kontenverwaltungsservervorrichtungen). Unter einer Servervorrichtung soll vorliegend beispielsweise ein Server verstanden werden. Zum Beispiel sind die Entitäten des Transaktionssystems verschieden von der Steuerungsvorrichtung.

Unter Transaktionsinformationen sollen vorliegend beispielsweise Informationen zur Ausführung einer Transaktion in einem Transaktionssystem verstanden werden. Zum Beispiel umfassen die Transaktionsinformationen der ersten Transaktion zumindest teilweise die ersten Routinginformationen und/oder die zweiten Routinginformationen. Transaktionsinformationen können beispielsweise in Form einer Nachricht und/oder einer Datei kommuniziert werden. Im Rahmen einer Transaktion können beispielsweise zumindest teilweise verschiedene Transaktionsinformationen kommuniziert werden. Ein Beispiel für Transaktionsinformationen ist eine Nachricht gemäß dem ISO 20022 Standard, eine Datei gemäß den technischen Spezifikationen des EBICS-Protokolls und/oder eine SEPA-Datei (z.B. eine SEPA-Datei gemäß den technischen Spezifikationen des European Payments Councils, eine SEPA-Datei gemäß den technischen Spezifikationen der Deutschen Bundesbank, eine SEPA-Datei gemäß den technischen Spezifikationen einer anderen nationalen Zentralbank und/oder eine SE-PA-Datei gemäß einem anderem nationalen SEPA-Derivat).

Unter Routinginformationen sollen vorliegend beispielsweise Informationen zum Routen von Transaktionsinformationen einer Transaktion in einem Transaktionssystem verstanden werden. Routinginformationen können beispielsweise ein Teil von Transaktionsinformationen einer Transaktion sein. Zum Beispiel dienen die Routinginformationen zumindest teilweise zur Identifizierung eines oder mehrerer der an einer Transaktion beteiligten Konten und/oder zumindest teilweise zur Identifizierung einer oder mehrere der an der Ausführung einer Transaktion beteiligten Entitäten eines Transaktionssystems.

Routinginformationen oder ein Teil von Routinginformationen sollen vorliegend beispielsweise als mit einer Entität eines Transaktionssystems assoziiert verstanden werden, wenn die Entität des Transaktionssystems anhand der Routinginformationen oder des Teils der Routinginformationen (z.B. mittelbar oder unmittelbar) identifizierbar ist. Es ist beispielsweise denkbar, dass verschiedene Routinginformationen jeweils mit derselben Entität eines Transaktionssystems assoziiert sind. Es ist beispielsweise jedoch auch denkbar, dass verschiedene Routinginformationen jeweils mit einer anderen Entität eines Transaktionssystems assoziiert sind. Zum Beispiel ist eine mit Routinginformationen assoziierte Entität durch die Routinginformationen aufgrund einer eindeutigen Verknüpfung zwischen den Routinginformationen und der mit den Routinginformationen assoziierten Entität des Transaktionssystems und/oder einer eindeutigen Adresse der mit den Routinginformationen assoziierten Entität des Transaktionssystems identifizierbar. Zum Beispiel sind in einem Speicher der erfindungsgemäßen Steuerungsvorrichtung Verknüpfungsinformationen gespeichert. Beispielsweise können solche Verknüpfungsinformationen Informationen über eine oder mehrere eindeutige Verknüpfungen zwischen Routinginformationen und einer mit den jeweiligen Routinginformationen assoziierten Entität des Transaktionssystems und/oder einer eindeutigen Adresse der mit den Routinginformationen assoziierten Entität des Transaktionssystems umfassen.

Zum Beispiel umfassen Routinginformationen eine Kombination aus Bankidentifizierungsinformationen wie eine Bankleitzahl (BLZ), einen SWIFT-Code und/oder einen Business Identification Code (BIC) und Kontoidentifizierungsinformationen wie eine Kontonummer und/oder eine International Bank Account Number (IBAN). Anhand von Bankidentifizierungsinformationen ist beispielsweise eine Bank eindeutig identifizierbar. Anhand von Kontoidentifizierungsinformationen ist beispielsweise ein bei einer Bank geführtes Konto eindeutig identifizierbar. Durch eine Kombination aus Bankidentifizierungsinformationen und Kontoidentifizierungsinformationen ist somit beispielsweise sowohl eine Bank als auch ein bei der Bank geführtes Konto eindeutig identifizierbar. Für den oben beschriebenen Fall, dass jedes von einer Bank oder einer Bank einer Gruppe von Banken geführtes Konto mit derselben Entität eines Transaktionssystems assoziiert ist, besteht beispielsweise jeweils eine eindeutige Verknüpfung zwischen Bankidentifizierungsinformationen, anhand derer eine Bank oder eine Bank einer Gruppe von Banken identifizierbar ist, und einer jeweiligen Entität des Transaktionssystems, so dass die jeweilige Entität des Transaktionssystems anhand der Bankidentifizierungsinformationen identifizierbar ist.

Zum Beispiel ist jede BLZ jeweils mit einer Entität des Transaktionssystems und/oder mit einer eindeutigen Adresse der jeweiligen Entität des Transaktionssystems verknüpft. Zum Beispiel ist jeder BIC jeweils mit einer Entität des Transaktionssystems und/oder mit einer eindeutigen Adresse der jeweiligen Entität des Transaktionssystems verknüpft. Zum Beispiel ist jeder SWIFT-Code jeweils mit einer Entität des Transaktionssystems und/oder mit einer eindeutigen Adresse der jeweiligen Entität des Transaktionssystems verknüpft. Zum Beispiel sind, wie oben beschrieben, in einem Speicher der erfindungsgemäßen Steuerungsvorrichtung Verknüpfungsinformationen gespeichert.

Eine eindeutige Adresse einer Entität des Transaktionssystems ist beispielsweise eine technische Adresse der Entität des Transaktionssystems wie eine URL und/oder eine Host-ID der Entität des Transaktionssystems.

Die ersten Routinginformationen identifizieren das Sendekonto der ersten Transaktion (z.B. ein Konto des Transaktionssenders), Zum Beispiel umfassen die ersten Routinginformationen eine Kombination aus Bankidentifizierungsinformationen und Kontoidentifizierungsinformationen zur Identifizierung des Sendekontos der ersten Transaktion. Zum Beispiel sind die ersten Routinginformationen eindeutig mit der ersten Entität des Transaktionssystems verknüpft. Zum Beispiel ist die erste Entität des Transaktionssystems anhand der ersten Routinginformationen identifizierbar.

Die zweiten Routinginformationen identifizieren das Empfangskonto der ersten Transaktion (z.B. ein Konto des Transaktionsempfängers). Zum Beispiel umfassen die zweiten Routinginformationen eine Kombination aus Bankidentifizierungsinformationen und Kontoidentifizierungsinformationen zur Identifizierung des Empfangskontos der ersten Transaktion. Zum Beispiel sind die zweiten Routinginformationen eindeutig mit der ersten Entität des Transaktionssystems verknüpft. Zum Beispiel ist die erste Entität des Transaktionssystems anhand der zweiten Routinginformationen identifizierbar.

Zum Beispiel ist die erste Entität eingerichtet, die erste Transaktion von dem Sendekonto der ersten Transaktion zu dem Empfangskonto der ersten Transaktion auszuführen (z.B. die Transaktionsinformationen der ersten Transaktion zu verarbeiten). Zum Beispiel umfassen Transaktionsinformationen der ersten Transaktion die ersten Routinginformationen und/oder die zweiten Routinginformationen.

Unter Empfangen zumindest eines Teils der ersten Routinginformationen an der Steuerungsvorrichtung soll vorliegend beispielsweise sowohl der Fall, dass (z.B. lediglich) ein Teil der ersten Routinginformationen an der Steuerungsvorrichtung empfangen wird, als auch der Fall, dass die ersten Routinginformationen (z.B. vollständig) an der Steuerungsvorrichtung empfangen werden, verstanden werden.

Zum Beispiel werden die ersten Routinginformationen oder der Teil der ersten Routinginformationen an der Steuervorrichtung von einer von der Steuervorrichtung verschiedenen Vorrichtung über eine Netzwerkverbindung empfangen. Zum Beispiel werden die ersten Routinginformationen von einem Benutzer (z.B. dem Transaktionssender) an einer von der Steuervorrichtung verschiedenen Vorrichtung erhalten (z.B. an der von der Steuervorrichtung verschiedenen Vorrichtung eingegeben oder empfangen). Zum Beispiel werden die ersten Routinginformationen von einer Vorrichtung des Transaktionssenders der ersten Transaktion oder einer Vorrichtung des Transaktionsempfängers der ersten Transaktion über eine Netzwerkverbindung zumindest teilweise an die Steuervorrichtung gesendet. Zum Beispiel werden die ersten Routinginformationen von einer von der Steuervorrichtung verschiedenen Vorrichtung über eine Netzwerkverbindung zumindest teilweise an die Steuervorrichtung gesendet werden.

Zum Beispiel umfasst der empfangene Teil der ersten Routinginformationen zumindest Informationen zur Identifizierung der ersten Entität des Transaktionssystems (z.B. Bankidentifizierungsinformationen wie BLZ und/oder BIC, anhand derer die erste Entität des Transaktionssystems identifizierbar ist).

Unter Bestimmen der zweiten Routinginformationen derart zumindest teilweise in Abhängigkeit des empfangenen Teils der ersten Routinginformationen durch die Steuerungsvorrichtung, dass die zweiten Routinginformationen ebenfalls mit der ersten Entität des Transaktionssystems assoziiert sind, soll vorliegend beispielsweise verstanden werden, dass die zweiten Routinginformationen derart bestimmt werden, dass sie wie die ersten Routinginformationen Informationen zur Identifizierung und/oder Adressierung der ersten Entität des Transaktionssystems umfassen (z.B. Bankidentifizierungsinformationen, anhand derer die erste Entität des Transaktionssystems identifizierbar ist). Zum Beispiel werden die zweiten Routinginformationen derart zumindest teilweise in Abhängigkeit des empfangenen Teils der ersten Routinginformationen durch die Steuerungsvorrichtung bestimmt, dass die zweiten Routinginformationen die gleichen Bankidentifizierungsinformationen wie die ersten Routinginformationen umfassen.

Unter Bereitstellen der zweiten Routinginformationen zum Ausführen der ersten Transaktion durch die Steuerungsvorrichtung soll vorliegend beispielsweise verstanden werden, dass die zweiten Routinginformationen derart bereitgestellt werden, dass die erste Transaktion zumindest teilweise in Abhängigkeit der zweiten Routinginformationen ausführbar ist. Wie unten ausführlich beschrieben, kann das Bereitstellen der zweiten Routinginformationen zum Ausführen der ersten Transaktion das Senden, durch die Steuerungsvorrichtung, der zweiten Routinginformationen an eine von der Steuerungsvorrichtung verschiedene Vorrichtung (z.B. über eine oder mehrere Netzwerkverbindungen umfassen). Alternativ oder zusätzlich kann das Bereitstellen der zweiten Routinginformationen zum Ausführen der ersten Transaktion das Anzeigen der zweiten Routinginformationen zum Ablesen durch einen Benutzer umfassen (z.B. das Anzeigen auf einem Anzeigemittel wie einem Bildschirm).

Durch das Bestimmen und das Bereitstellen der zweiten Routinginformationen kann die Ausführung der ersten Transaktion beispielsweise derart gesteuert werden, dass bei der Ausführung der ersten Transaktion keine Kommunikation zwischen mehreren Entitäten des Transaktionssystems mehr stattfindet. Dadurch kann beispielsweise die für die Ausführung der ersten Transaktion notwendige Ausführungszeit optimiert werden. Zum Beispiel kann die Ausführungszeit für die erste Transaktion weniger als 60 Sekunden, vorzugsweise weniger als 30 Sekunden, besonders vorzugsweise weniger als 10 Sekunden betragen. Ferner kann durch das Bestimmen und das Bereitstellen der zweiten Routinginformationen die Ausführung der ersten Transaktion beispielsweise derart gesteuert werden, dass die erste Transaktion vollständig von der ersten Entität des Transaktionssystems ausführbar ist. Die oben beschriebenen zusätzlichen Schritte, wenn an einer Transaktion verschiedene Entitäten des Transaktionssystems beteiligt sind, können demnach entfallen. Dadurch werden beispielsweise (zumindest) die übrigen Entitäten des Transaktionssystems von der Ausführung der ersten Transaktion entlastet. Auch kann dadurch die Entstehung von Fremdgebühren im Rahmen einer Transaktion (z.B. der ersten Transaktion) vermieden werden. Insgesamt kann die vorliegende Erfindung beispielsweise Prozessschritte, Zeit und Kosten bei der Ausführung einer Transaktion minimieren.

Die vorliegende Erfindung ist deshalb beispielsweise vorteilhaft, um die Ausführung einer Transaktion (z.B. der ersten Transaktion) in dem Transaktionssystem zu optimieren und die für die Ausführung einer Transaktion (z.B. der ersten Transaktion) notwendigen Ressourcen des Transaktionssystems zu minimieren.

Insbesondere ist die vorliegende Erfindung beispielsweise vorteilhaft, um die Kommunikation zwischen mehreren Entitäten des Transaktionssystems bei der Ausführung von Transaktionen - soweit möglich - zu verringern. Zwar sind Fälle denkbar, in denen keine zweiten Routinginformationen in Abhängigkeit des empfangenen Teils der ersten Routinginformationen durch die erfindungsgemäße Steuerungsvorrichtung bestimmbar sind. Allerdings verringert sich die Kommunikation zwischen den Entitäten des Transaktionssystems bereits, wenn die vorliegende Erfindung nur bei einem Anteil der Transaktionen in dem Transaktionssystem angewendet wird.

Weitere Vorteile der offenbarten Erfindung werden nachfolgend anhand beispielhafter Ausführungsformen beschrieben, deren Offenbarung für die jeweiligen Kategorien (Verfahren, Vorrichtung, System, Computerprogramm, Verwendung) gleichermaßen gelten soll.

Gemäß einer beispielhaften Ausführungsform der Erfindung umfasst das Bestimmen der zweiten Routinginformationen das Auswählen der zweiten Routinginformationen aus einer Mehrzahl von Routinginformationen.

Zum Beispiel wird die zweite Routinginformation in Abhängigkeit des empfangenen Teils der ersten Routinginformation aus der Mehrzahl der Routinginformationen ausgewählt. Zum Beispiel umfasst das Auswählen der zweiten Routinginformationen in Abhängigkeit des empfangenen Teils der ersten Routinginformation aus der Mehrzahl von Routinginformationen das Identifizieren der ersten Entität zumindest teilweise in Abhängigkeit des empfangenen Teils der ersten Routinginformationen und das Auswählen der zweiten Routinginformationen aus der Mehrzahl der Routinginformationen derart, dass die zweiten Routinginformationen mit der identifizierten ersten Entität assoziiert sind (z.B. die erste Entität identifizieren).

Die Mehrzahl der Routinginformationen ist beispielsweise vorgegeben. Zum Beispiel ist die Mehrzahl der Routinginformationen als Auswahlinformationen in einem Speicher der Steuerungsvorrichtung gespeichert. Dies ist beispielsweise vorteilhaft, um eine Mehrzahl von Routinginformationen vorgeben zu können, aus der in Abhängigkeit des empfangenen Teils der ersten Routinginformationen die zweite Routinginformationen ausgewählt werden können. Zum Beispiel sind die Routinginformationen der Mehrzahl der Routinginformationen zumindest teilweise voneinander verschiedene Routinginformationen. Zum Beispiel identifizieren die Routinginformationen der Mehrzahl von Routinginformationen verschiedene mögliche Empfangskonten der ersten Transaktion. Wie oben beschrieben, kann die erste Transaktion beispielsweise zum Begleichen einer Zahlungsforderung zwischen einem Transaktionssender (z.B. einem Käufer) und einem Transaktionsempfänger (z.B. einem Verkäufer) dienen. In diesem Fall identifizieren die Routinginformationen der Mehrzahl von Routinginformationen beispielsweise verschiedene Konten bei verschiedenen Banken, deren Besitzer/Eigentümer der Transaktionsempfänger (z.B. der Verkäufer) ist.

Zum Beispiel sind die von den zweiten Routinginformationen verschiedenen weiteren Routinginformationen der Mehrzahl von Routinginformationen zumindest teilweise jeweils mit einer von der ersten Entität des Transaktionssystems verschiedenen weiteren Entität des Transaktionssystems assoziiert. Vorteilhafterweise ist jede Entität des Transaktionssystems mit zumindest einer der Routinginformationen der Mehrzahl der Routinginformationen assoziiert, so dass die zweiten Routinginformation in Abhängigkeit von beliebigen ersten Routinginformationen derart aus der Mehrzahl der Routinginformationen wählbar sind, dass sie stets mit der ersten Entität des Transaktionssystems (d.h. mit der gleichen Entität wie die ersten Routinginformationen) assoziiert sind.

Wie oben beschrieben, sind jedoch Fälle denkbar, in denen keine zweiten Routinginformationen in Abhängigkeit des empfangenen Teils der ersten Routinginformationen durch die erfindungsgemäße Steuerungsvorrichtung bestimmbar sind. Dies ist beispielsweise der Fall, wenn keine der Routinginformationen der Mehrzahl von Routinginformationen mit der ersten Entität des Transaktionssystems (d.h. mit der gleichen Entität wie die ersten Routinginformationen) assoziiert sind. In diesem Fall können beispielsweise Routinginformationen der Mehrzahl der Routinginformationen vorgegeben sein, die als zweite Routinginformationen ausgewählt werden. Zum Beispiel ist die Mehrzahl der Routinginformationen zumindest mit mehr als 49%, vorzugsweise mit mehr als 69%, besonders vorzugsweise mit mehr als 89% der Entitäten des Transaktionssystems assoziiert.

Gemäß einer beispielhaften Ausführungsform der Erfindung umfasst das Bereitstellen der zweiten Routinginformationen zum Ausführen der ersten Transaktion das Senden, durch die Steuerungsvorrichtung, der zweiten Routinginformationen an eine von der Steuerungsvorrichtung verschiedene Vorrichtung (z.B. über eine oder mehrere Netzwerkverbindungen). Zum Beispiel umfasst das Bereitstellen der zweiten Routinginformationen zum Ausführen der ersten Transaktion das Senden, durch die Steuerungsvorrichtung, der ersten Routinginformationen und der zweiten Routinginformationen an eine von der Steuerungsvorrichtung verschiedene Vorrichtung (z.B. über eine oder mehrere Netzwerkverbindungen).

Zum Beispiel ist die von der Steuerungsvorrichtung verschiedene Vorrichtung eine Online-Banking-Servervorrichtung. Zum Beispiel umfasst die erste Entität des Transaktionssystems die Online-Banking-Servervorrichtung. Beispielsweise ist die OnlineBanking-Servervorrichtung zumindest ein Teil der ersten Entität des Transaktionssystems. Zum Beispiel werden die ersten Routinginformationen und/oder die zweiten Routinginformationen von der Steuerungsvorrichtung an die Online-Banking-Servervorrichtung gesendet, um die Online-Banking-Servervorrichtung zu veranlassen, ein vorausgefülltes Transaktionsformular zur Autorisierung der ersten Transaktion durch einen Benutzer (z.B. den Besitzer/Eigentümer des Sendekontos der ersten Transaktion) in Abhängigkeit der ersten Routinginformationen und/oder der zweiten Routinginformationen auf einer Online-Banking-Webseite bereitzustellen. Zum Beispiel kann der Benutzer durch ein Benutzerendgerät wie einen Computer, einen Laptop oder ein Smartphone auf die Online-Banking-Webseite zugreifen. Zum Beispiel kann der Benutzer über einen Verweis (z.B. einen Uniform Resource Locator, URL) auf die Online-Banking-Website zugreifen. Zum Beispiel wird der Verweis zum Zugreifen auf die Online-Banking-Website von der Steuervorrichtung bereitgestellt (z.B. an eine von der Steuervorrichtung verschiedene Vorrichtung des Benutzers gesendet). Dies ist beispielsweise vorteilhaft, wenn die erste Transaktion eine Überweisung ist, um Fehler beim Ausfüllen des Transaktionsformulars durch den Benutzer zu vermeiden und eine schnelle Autorisierung der ersten Transaktion zu ermöglichen.

Zum Beispiel ist die von der Steuerungsvorrichtung verschiedene Vorrichtung die erste Entität des Transaktionssystems. Zum Beispiel werden die ersten Routinginformationen und/oder die zweiten Routinginformationen von der Steuerungsvorrichtung an die erste Entität des Transaktionssystems gesendet, um die erste Entität des Transaktionssystems zu veranlassen, die erste Transaktion auszuführen. Dies ist beispielsweise vorteilhaft, wenn die erste Transaktion eine Lastschrift ist, um eine Ausführung der ersten Transaktion durch die erste Entität des Transaktionssystems zu veranlassen.

Gemäß einer beispielhaften Ausführungsform der Erfindung umfasst das Bereitstellen der zweiten Routinginformationen zum Ausführen der ersten Transaktion das Erstellen, durch die Steuerungsvorrichtung, von Transaktionsinformationen der ersten Transaktion zumindest teilweise in Abhängigkeit der zweiten Routinginformationen. Zum Beispiel werden die Transaktionsinformationen der ersten Transaktion zumindest teilweise in Abhängigkeit der ersten Routinginformationen und der zweiten Routinginformationen durch die die Steuerungsvorrichtung erstellt. Zum Beispiel umfassen die erstellten Transaktionsinformationen der ersten Transaktion die ersten Routinginformationen und/oder die zweiten Routinginformationen.

Wie oben beschrieben, können Transaktionsinformationen beispielsweise in Form einer Nachricht und/oder einer Datei in einem Transaktionssystem kommuniziert werden. Ein Beispiel für Transaktionsinformationen ist eine Nachricht gemäß dem ISO 20022 Standard und/oder eine SEPA-Datei. Zum Beispiel werden die Transaktionsinformationen der ersten Transaktion durch die Steuerungsvorrichtung in Form einer Nachricht gemäß dem ISO 20022 Standard und/oder einer SEPA-Datei erstellt.

Die durch die Steuerungsvorrichtung erstellten Transaktionsinformationen können ferner weitere Informationen wie Referenzinformationen (z.B. eine End-to-End-Referenz) umfassen. Dies ist beispielsweise vorteilhaft, um die Transaktion alleine anhand der Referenzinformationen identifizieren zu können.

Zum Beispiel umfasst das Bereitstellen der zweiten Routinginformationen zum Ausführen der ersten Transaktion ferner das Senden, durch die Steuerungsvorrichtung, der erstellten Transaktionsinformationen an eine von der Steuerungsvorrichtung verschiedene Vorrichtung (z.B. die erste Entität des Transaktionssystems und/oder eine Online-Banking-Servervorrichtung).

Gemäß einer beispielhaften Ausführungsform der Erfindung umfasst das erfindungsgemäße Verfahren ferner das Prüfen, durch die Steuerungsvorrichtung, ob die erste Transaktion ausgeführt wurde. Zum Beispiel sendet die Steuerungsvorrichtung eine Prüfanfrage an die erste Entität des Transaktionssystems (z.B. über eine oder mehrere Netzwerkverbindungen). Zum Beispiel empfängt die Steuerungsvorrichtung als Antwort auf die Prüfanfrageüber die Netzwerkverbindung von der erste Entität des Transaktionssystems Prüfinformationen (z.B. über eine oder mehrere Netzwerkverbindungen), ob die erste Transaktion ausgeführt wurde. Die Prüfinformationen können beispielsweise Kontoauszugsinformationen (z.B. einen Kontoauszug oder einen Teil eines Kontoauszugs), Guthabeninformationen, Umsatzinformationen und/oder Zahlungseingangsinformationen des Empfangskontos der ersten Transaktion umfassen.

Zum Beispiel umfasst das erfindungsgemäße Verfahren ferner das Bereitstellen, durch die Steuerungsvorrichtung, von ersten Zahlungsinformationen, ob die erste Transaktion ausgeführt wurde. Zum Beispiel umfasst das Bereitstellen, durch die Steuerungsvorrichtung, der ersten Zahlungsinformationen das Senden der ersten Zahlungsinformationen von der Steuerungsvorrichtung an eine von der Steuerungsvorrichtung verschiedene Vorrichtung.

Wie oben beschrieben, kann die erste Transaktion beispielsweise zum Begleichen einer Zahlungsforderung zwischen einem Transaktionssender (z.B. einem Käufer) und einem Transaktionsempfänger (z.B. einem Verkäufer) dienen. In diesem Fall ist die von der Steuerungsvorrichtung verschiedene Vorrichtung beispielsweise eine Vorrichtung des Transaktionsempfängers (z.B. des Verkäufer). Zum Beispiel umfasst das Bereitstellen, durch die Steuerungsvorrichtung, der ersten Zahlungsinformationen das Senden der ersten Zahlungsinformationen von der Steuerungsvorrichtung an die Vorrichtung des Verkäufers, um die Lieferung eines von dem Käufer bestellten Produkts von dem Verkäufer an den Käufer zu veranlassen, wenn die erste Transaktion ausgeführt wurde. Zum Beispiel ist die Vorrichtung des Verkäufers eingerichtet, die Lieferung eines von dem Käufer bestellten Produkts von dem Verkäufer an den Käufer zu veranlassen, wenn Zahlungsinformationen, dass die erste Transaktion ausgeführt wurde, an der Vorrichtung des Verkäufers empfangen werden. Dies ist beispielsweise vorteilhaft, um die Lieferung des von dem Käufer bestellten Produkts zu steuern und sicherzustellen, dass die Lieferung des von dem Käufer bestellten Produkts veranlasst wird, sobald die erste Transaktion ausgeführt wurde. In diesem Fall ermöglicht das erfindungsgemäße Verfahren unter anderem beispielsweise zumindest teilweise die Steuerung der ersten Transaktion zur Begleichung der Zahlungsforderung zwischen dem Käufer und dem Verkäufer sowie die Steuerung der Lieferung des von dem Käufer bestellten Produkts.

Gemäß einer beispielhaften Ausführungsform der Erfindung ist die erste Transaktion und/oder die unten beschriebene zweite Transaktion eine Überweisung (z.B. eine SE-PA-Überweisung oder eine DTA-Überweisung) und/oder eine Lastschrift (z.B. eine SEPA-Lastschrift, eine DTA-Lastschrift oder eine elektronische Lastschrift im elektronischen Lastschriftverfahren).

Zum Beispiel ist die erste Transaktion und/oder die unten beschriebene zweite Transaktion eine Online-Transaktion, die durch einen Benutzer (z.B. den Besitzer/Eigentümer des Sendekontos der ersten Transaktion) auf einer Online-Banking-Webseite (z.B. auf einer von der ersten Entität umfassten Online-Banking-Servervorrichtung bereitgestellten Online-Banking-Webseite) autorisiert wird. Zum Beispiel kann die Online-Transaktion durch den Benutzer durch ein oder mehrere Autorisierungsmerkmale wie eine PIN (Persönliche Identifikationsnummer), eine TAN (Transaktionsnummer) und/oder eine Chipkarte autorisiert werden. Zum Beispiel greift der Benutzer auf die Online-Banking-Webseite über ein Benutzerendgerät wie einen Computer, einen Laptop oder ein Smartphone zu. Zum Beispiel umfasst das Benutzerendgerät Erfassungsmittel (z.B. eine Tastatur und/oder ein Chipkarten-Lesegerät) zum Erfassen der Autorisierungsmerkmale.

Zum Beispiel ist die erste Transaktion und/oder die unten beschriebene zweite Transaktion eine von einem Benutzer an einem Transaktionsterminal wie einem Selbstbedienungs-Bankterminal und/oder einem Bezahlterminal (z.B. einem Point of Sale Terminal, POS-Terminal) autorisierte Transaktion. Zum Beispiel kann die Transaktion durch ein oder mehrere Autorisierungsmerkmale wie eine Unterschrift, eine Chipkarte und/oder eine PIN autorisiert werden. Zum Beispiel umfasst das Transaktionsterminal Erfassungsmittel (z.B. eine Tastatur, ein Chipkarten-Lesegerät und/oder ein Unterschriftenpad) zum Erfassen der Autorisierungsmerkmale.

Zum Beispiel kann die erste Transaktion und/oder die unten beschriebene zweite Transaktion eine von einem Benutzer an einem Transaktionsterminal autorisierte Überweisung sein. Wenn der Benutzer die Überweisung durch eine Unterschrift autorisiert, kann die Bank die Berechtigung des Benutzers beispielsweise durch einen Unterschriftenvergleich (wie beim elektronischen Lastschriftverfahren) prüfen. Dies ist beispielsweise vorteilhaft im Rahmen der Bezahlung an einem Bezahlterminal, da die Überweisung erfindungsgemäß in sehr kurzer Zeit (z.B. in wenigen Sekunden, wie oben beschrieben) ausgeführt werden kann und dem Verkäufer unmittelbar nach der Überweisung Zahlungsinformation, ob die Überweisung ausgeführt wurde, bereitgestellt werden können. Die Nachteile des elektronischen Lastschriftverfahrens wie die Unsicherheit, ob das Sendekonto gedeckt ist, oder die achtwöchige Rückgabemöglichkeit entfallen für den Verkäufer daher, ohne dass sich die aus dem elektronischen Lastschriftverfahren bekannte Interaktion des Benutzers (z.B. die Autorisierung der Transaktion durch eine Unterschrift) mit dem Bezahlterminal ändert.

Gemäß einer beispielhaften Ausführungsform der Erfindung ist die erste Entität des Transaktionssystems eingerichtet, die erste Transaktion zumindest teilweise auszuführen. Wie oben beschrieben, umfasst das Ausführen einer Transaktion beispielsweise die Kommunikation von Transaktionsinformationen zwischen einer oder mehreren Entitäten des Transaktionssystems (z.B. zwischen einer mit dem Sendekonto der Transaktion assoziierten Entität des Transaktionssystems und einer mit dem Empfangskonto der Transaktion assoziierten Entität des Transaktionssystems) und/oder das Verarbeiten der Transaktionsinformationen durch eine oder mehrere Entitäten des Transaktionssystems (z.B. eine mit dem Sendekonto der Transaktion assoziierten Entität des Transaktionssystems und eine mit dem Empfangskonto der Transaktion assoziierten Entität des Transaktionssystems).

Zum Beispiel ist die erste Entität des Transaktionssystems eingerichtet, Transaktionsinformationen für das Empfangskonto der ersten Transaktion und für das SendeKonto der ersten Transaktion zu senden und zu empfangen und/oder Transaktionsinformationen für das Empfangskonto der ersten Transaktion und für das Sendekonto der ersten Transaktion zu verarbeiten. Dies ist beispielsweise vorteilhaft, damit die erste Transaktion ohne Beteiligung einer weiteren Entität des Transaktionssystems ausführbar ist.

Gemäß einer beispielhaften Ausführungsform der Erfindung umfasst die erste Entität des Transaktionssystems und/oder die unten beschriebene zweite Entität des Transaktionssystems eine oder mehrere Servervorrichtungen (z.B. eine oder mehrere Transaktionsservervorrichtungen, eine oder mehrere Online-Banking-Servervorrichtungen und/oder eine oder mehrere Kontenverwaltungsservervorrichtungen). Zum Beispiel sind die Servervorrichtungen Teil eines Rechenzentrums einer Bank oder eine Gruppen von Banken (z.B. Teil des Rechenzentrums einer Institutsgruppe wie dem Sparkassenverband, einer genossenschaftlichen Bankengruppe wie die Fiducia oder einer Großbank und Ihre Direktbanktöchter wie Commerzbank und comdirect).

Gemäß einer beispielhaften Ausführungsform der Erfindung umfassen die ersten Routinginformationen und/oder die zweiten Routinginformationen und/oder die unten beschriebenen dritten Routinginformationen und/oder die unten beschriebenen vierten Routinginformationen eine Bankidentifizierungsinformation und/oder eine Kontoidentifizierungsinformation. Wie oben beschrieben, können diese Routinginformationen beispielsweise eine Kombination aus Bankidentifizierungsinformationen wie eine Bankleitzahl (BLZ), einen SWIFT-Code und/oder einen Business Identification Code (BIC) und Kontoidentifizierungsinformationen wie eine Kontonummer und/oder eine International Bank Account Number (IBAN) umfassen.

Gemäß einer beispielhaften Ausführungsform der Erfindung umfasst das erfindungsgemäße Verfahren ferner das Bestimmen von dritten Routinginformationen in Abhängigkeit von vierten Routinginformationen durch die Steuerungsvorrichtung, wobei die vierten Routinginformationen mit einer zweiten Entität des Transaktionssystems assoziiert sind, wobei die vierten Routinginformationen ein Empfangskonto einer zweiten Transaktion identifizieren, und wobei die dritten Routinginformationen derart bestimmt werden, dass die dritten Routinginformationen ebenfalls mit der zweiten Entität des Transaktionssystems assoziiert sind, wobei die die dritten Routinginformationen ein Sendekonto der zweiten Transaktion identifizieren, und das Bereitstellen, durch die Steuerungsvorrichtung, der dritten Routinginformationen zum Ausführen der zweiten Transaktion. Das Bestimmen der dritten Routinginformationen in Abhängigkeit der vierten Routinginformationen durch die Steuerungsvorrichtung entspricht beispielsweise dem oben beschriebenen Bestimmen der zweiten Routinginformationen in Abhängigkeit der ersten Routinginformationen. Das Bereitstellen, durch die Steuerungsvorrichtung, der dritten Routinginformationen zum Ausführen der zweiten Transaktion entspricht beispielsweise dem oben beschriebenen Bereitstellen, durch die Steuerungsvorrichtung, der zweiten Routinginformationen zum Ausführen der ersten Transaktion.

Zum Beispiel umfasst das erfindungsgemäße Verfahren ferner das Prüfen, durch die Steuerungsvorrichtung, ob die zweite Transaktion ausgeführt wurde. Zum Beispiel sendet die Steuerungsvorrichtung eine Prüfanfrage an die zweite Entität des Transaktionssystems (z.B. über eine oder mehrere Netzwerkverbindungen). Zum Beispiel empfängt die Steuerungsvorrichtung als Antwort auf die Prüfanfrage von der zweiten Entität des Transaktionssystems Prüfinformationen (z.B. über eine oder mehrere Netzwerkverbindungen), ob die zweite Transaktion ausgeführt wurde. Die Prüfinformationen können beispielsweise Kontoauszugsinformationen (z.B. einen Kontoauszug oder einen Teil eines Kontoauszugs), Guthabeninformationen, Umsatzinformationen und/oder Zahlungseingangsinformationen des Empfangskontos der zweiten Transaktion umfassen.

Zum Beispiel umfasst das erfindungsgemäße Verfahren ferner das Bereitstellen, durch die Steuerungsvorrichtung, von zweiten Zahlungsinformationen, ob die zweite Transaktion ausgeführt wurde. Zum Beispiel umfasst das Bereitstellen, durch die Steuerungsvorrichtung, der zweiten Zahlungsinformationen das Senden der zweiten Zahlungsinformationen von der Steuerungsvorrichtung an eine von der Steuerungsvorrichtung verschiedene Vorrichtung (z.B. über eine oder mehrere Netzwerkverbindungen).

Zum Beispiel ist die von der Steuerungsvorrichtung verschiedene Vorrichtung eine Vorrichtung des Transaktionsempfängers (z.B. des Verkäufers). Zum Beispiel umfasst das Bereitstellen, durch die Steuerungsvorrichtung, der ersten Zahlungsinformationen das Senden der zweiten Zahlungsinformationen von der Steuerungsvorrichtung an die Vorrichtung des Verkäufers, um die Lieferung eines von dem Käufer bestellten Produkts von dem Verkäufer an den Käufer zu veranlassen, wenn die zweite Transaktion ausgeführt wurde. Zum Beispiel ist die Vorrichtung des Verkäufers eingerichtet, die Lieferung eines von dem Käufer bestellten Produkts von dem Verkäufer an den Käufer zu veranlassen, wenn Zahlungsinformationen, dass die zweite Transaktion ausgeführt wurde, an der Vorrichtung des Verkäufers empfangen werden. Dies ist beispielsweise vorteilhaft, um die Lieferung des von dem Käufer bestellten Produkts zu steuern und sicherzustellen, dass die Lieferung des von dem Käufer bestellten Produkts veranlasst wird, sobald die zweite Transaktion ausgeführt wurde. In diesem Fall ermöglicht das erfindungsgemäße Verfahren beispielsweise die Steuerung der ersten und zweiten Transaktion zur Begleichung der Zahlungsforderung zwischen dem Käufer und dem Verkäufer sowie die Steuerung der Lieferung des von dem Käufer bestellten Produkts.

Zum Beispiel können die erste Transaktion und die zweite Transaktion zusammen zum Begleichen einer Zahlungsforderung zwischen einem Transaktionssender (z.B. einem Käufer) und einem Transaktionsempfänger (z.B. einem Verkäufer) dienen. Beispielsweise ist der Transaktionssender (z.B. der Käufer) Besitzer/Eigentümer des Sendekontos der ersten Transaktion und der Transaktionsempfänger (z.B. der Verkäufer) ist Besitzer/Eigentümer des Empfangskontos der zweiten Transaktion. Besitzer/Eigentümer des Empfangskontos der ersten Transaktion und des Sendekontos der zweiten Transaktion ist beispielsweise ein Diensteanbieter, der das erfindungsgemäße Verfahren als Dienst für Benutzer wie den Käufer und/oder den Verkäufer anbietet und/oder die erfindungsgemäße Steuerungsvorrichtung bereitstellt. Dies ist beispielsweise vorteilhaft, um eine Kommunikation zwischen den Entitäten des Transaktionssystems zu vermeiden, wenn das Konto des Transaktionsempfängers (z.B. des Verkäufers) und das Konto des Transaktionssenders (z.B. des Käufers) nicht mit derselben Entität des Transaktionssystems assoziiert sind.

Zum Beispiel umfasst das erfindungsgemäße Verfahren ferner das Ausführen der zweiten Transaktion durch die zweite Entität des Transaktionssystems. Zum Beispiel ist die zweite Entität des Transaktionssystems eingerichtet, die zweite Transaktion zumindest teilweise auszuführen. Wie oben beschrieben, umfasst das Ausführen einer Transaktion beispielsweise die Kommunikation von Transaktionsinformationen zwischen einer oder mehreren Entitäten des Transaktionssystems (z.B. zwischen einer mit dem Sendekonto der Transaktion assoziierten Entität des Transaktionssystems und einer mit dem Empfangskonto der Transaktion assoziierten Entität des Transaktionssystems) und/oder das Verarbeiten der Transaktionsinformationen durch eine oder mehrere Entitäten des Transaktionssystems (z.B. eine mit dem Sendekonto der Transaktion assoziierten Entität des Transaktionssystems und eine mit dem Empfangskonto der Transaktion assoziierten Entität des Transaktionssystems).

Zum Beispiel ist die zweite Entität des Transaktionssystems eingerichtet, Transaktionsinformationen für das Empfangskonto der zweiten Transaktion und für das Sendekonto der zweiten Transaktion zu senden und zu empfangen und/oder Transaktionsinformationen für das Empfangskonto der zweiten Transaktion und für das Sendekonto der zweiten Transaktion zu verarbeiten. Dies ist beispielsweise vorteilhaft, damit die zweite Transaktion ohne Beteiligung einer weiteren Entität des Transaktionssystems ausführbar ist.

Wie oben beschrieben, kann die erfindungsgemäße Steuerungsvorrichtung das Ausführen der zweiten Transaktion durch die zweite Entität des Transaktionssystems beispielsweise veranlassen (z.B. steuern), indem sie Transaktionsinformationen der zweiten Transaktion an die zweite Entität des Transaktionssystems sendet.

Gemäß einer beispielhaften Ausführungsform der Erfindung umfasst das erfindungsgemäße Verfahren ferner das Ausführen der ersten Transaktion durch die erste Entität des Transaktionssystems. Zum Beispiel ist die erste Entität des Transaktionssystems eingerichtet, die erste Transaktion zumindest teilweise auszuführen. Wie oben beschrieben, umfasst das Ausführen einer Transaktion beispielsweise die Kommunikation von Transaktionsinformationen zwischen einer oder mehreren Entitäten des Transaktionssystems (z.B. zwischen einer mit dem Sendekonto der Transaktion assoziierten Entität des Transaktionssystems und einer mit dem Empfangskonto der Transaktion assoziierten Entität des Transaktionssystems) und/oder das Verarbeiten der Transaktionsinformationen durch eine oder mehrere Entitäten des Transaktionssystems (z.B. eine mit dem Sendekonto der Transaktion assoziierten Entität des Transaktionssystems und eine mit dem Empfangskonto der Transaktion assoziierten Entität des Transaktionssystems).

Zum Beispiel ist die erste Entität des Transaktionssystems eingerichtet, Transaktionsinformationen für das Empfangskonto der ersten Transaktion und für das Sendekonto der ersten Transaktion zu senden und zu empfangen und/oder Transaktionsinformationen für das Empfangskonto der ersten Transaktion und für das Sendekonto der ersten Transaktion zu verarbeiten. Dies ist beispielsweise vorteilhaft, damit die erste Transaktion ohne Beteiligung einer weiteren Entität des Transaktionssystems ausführbar ist.

Wie oben beschrieben, kann die erfindungsgemäße Steuerungsvorrichtung das Ausführen der zweiten Transaktion durch die zweite Entität des Transaktionssystems beispielsweise veranlassen (z.B. steuern), indem sie Transaktionsinformationen der zweiten Transaktion an die zweite Entität des Transaktionssystems sendet.

Die oben beschriebenen Ausführungsbeispiele und beispielhaften Ausgestaltungen der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1: ein Blockdiagramm einer beispielhaften Ausführungsform einer erfindungsgemäßen Steuerungsvorrichtung;
- Fig. 2: ein Blockdiagramm eines beispielhaften Transaktionssystems;
- Fig. 3: ein Blockdiagramm einer beispielhaften Ausführungsform eines erfindungsgemäßen Systems;
- Fig. 4: ein Ablaufdiagramm mit Schritten einer beispielhaften Ausführungsform des erfindungsgemäßen Verfahrens;
- Fig. 5: ein weiteres Ablaufdiagramm mit Schritten einer beispielhaften Ausführungsform des erfindungsgemäßen Verfahrens; und
- Fig. 6a: ein Blockdiagramm mit beispielhaften Kommunikationsschritten beim Ablauf einer beispielhaften Ausführungsform des erfindungsgemäßen Verfahrens in einer beispielhaften Ausführungsform eines erfindungsgemäßen Systems; und
- Fig. 6b: ein weiteres Blockdiagramm mit beispielhaften Kommunikationsschritten beim Ablauf einer beispielhaften Ausführungsform des erfindungsgemäßen Verfahrens in einer beispielhaften Ausführungsform eines erfindungsgemäßen Systems.

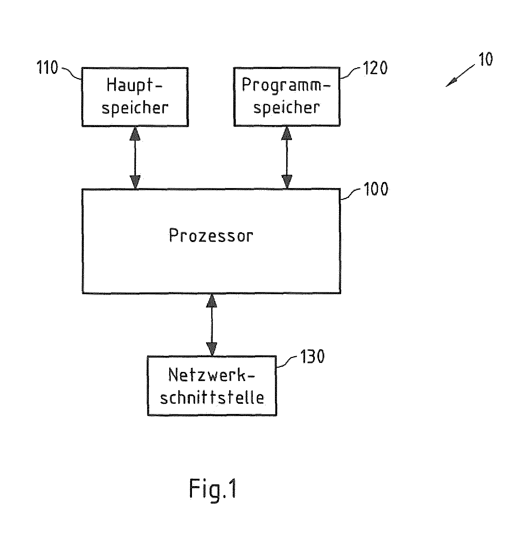

Fig. 1 zeigt ein Blockdiagramm einer beispielhaften Ausführungsform einer erfindungsgemäßen Steuerungsvorrichtung 10. Steuerungsvorrichtung 10 ist beispielsweise ein Server. Prozessor 100 der Steuerungsvorrichtung 10 ist insbesondere als Mikroprozessor, Mikrokontrolleinheit wie Mikrocontroller, digitaler Signalprozessor (DSP), Anwendungsspezifische Integrierte Schaltung (ASIC) oder Field Programmable Gate Array (FPGA) ausgebildet.

Prozessor 100 führt Programmanweisungen aus, die in Programmspeicher 120 gespeichert sind, und speichert beispielsweise Zwischenergebnisse oder ähnliches in Hauptspeicher 110. Zum Beispiel ist Programmspeicher 120 ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Hauptspeicher 110 ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Programmspeicher 120 ist vorzugsweise ein lokaler mit der Steuerungsvorrichtung 10 fest verbundener Datenträger. Mit der Steuerungsvorrichtung 10 fest verbundene Datenträger sind beispielsweise Festplatten, die in die Steuerungsvorrichtung 10 eingebaut sind. Alternativ kann der Datenträger beispielsweise auch ein mit der Steuerungsvorrichtung 10 trennbar verbindbarer Datenträger sein wie ein Speicher-Stick, ein Wechseldatenträger, eine tragbare Festplatte, eine CD, eine DVD und/oder eine Diskette.

In Programmspeicher 120 ist das Betriebssystem von Steuerungsvorrichtung 10 gespeichert, das beim Starten der Steuerungsvorrichtung 10 zumindest teilweise in Hauptspeicher 110 geladen und vom Prozessor 100 ausgeführt wird. Insbesondere wird beim Starten von Steuerungsvorrichtung 10 zumindest ein Teil des Kerns des Betriebssystems in den Hauptspeicher 110 geladen und von Prozessor 100 ausgeführt. Das Betriebssystem von Steuerungsvorrichtung 10 ist vorzugsweise ein Windows-, UNIX-, Linux-, Android-, und/oder iOS-Betriebssystem.

Erst das Betriebssystem ermöglicht die Verwendung von Steuerungsvorrichtung 10 zur Datenverarbeitung. Es verwaltet beispielsweise Betriebsmittel wie Hauptspeicher 110 und Programmspeicher 120 und Netzwerkschnittstelle 130, stellt unter anderem durch Programmierschnittstellen anderen Programmen grundlegende Funktionen zur Verfügung und steuert die Ausführung von Programmen.

Ferner sind in Programmspeicher 120 beispielsweise Programmanweisungen gespeichert, die den Prozessor 120, wenn er die Programmanweisungen ausführt, veranlassen, das erfindungsgemäße Verfahren zumindest teilweise auszuführen und/oder zu steuern. Zum Beispiel ist in Programmspeicher 120 ein erfindungsgemäßes Computerprogramm gespeichert.

Prozessor 100 steuert die Netzwerkschnittstelle 130, wobei die Steuerung der Netzwerkschnittstelle 130 beispielsweise durch ein Gerätereiberprogramm ermöglicht wird, das Teil des Kerns des Betriebssystems ist. Netzwerkschnittstelle 130 ist beispielsweise eine Netzwerkkarte, ein Netzwerkmodul und/oder ein Modem und ist eingerichtet, um eine oder mehrere Verbindungen der Steuervorrichtung 10 mit einem Netzwerk herzustellen. Netzwerkschnittstelle 130 ist beispielsweise eingerichtet, Informationen über das Netzwerk zu empfangen und an Prozessor 100 weiterzuleiten und/oder Informationen von Prozessor 100 zu empfangen und über das Netzwerk zu senden. Beispiele für ein Netzwerk sind ein lokales Netzwerk (LAN) wie ein Ethernet-Netzwerk oder ein IEEE 802-Netzwerk, ein Weitverkehrsnetzwerk (WAN), ein globales Netzwerk (global area network, GAN), ein drahtloses Netzwerk, ein drahtgebundenes Netzwerk, ein Mobilfunknetzwerk, ein Telefonnetzwerk und/oder das Internet.

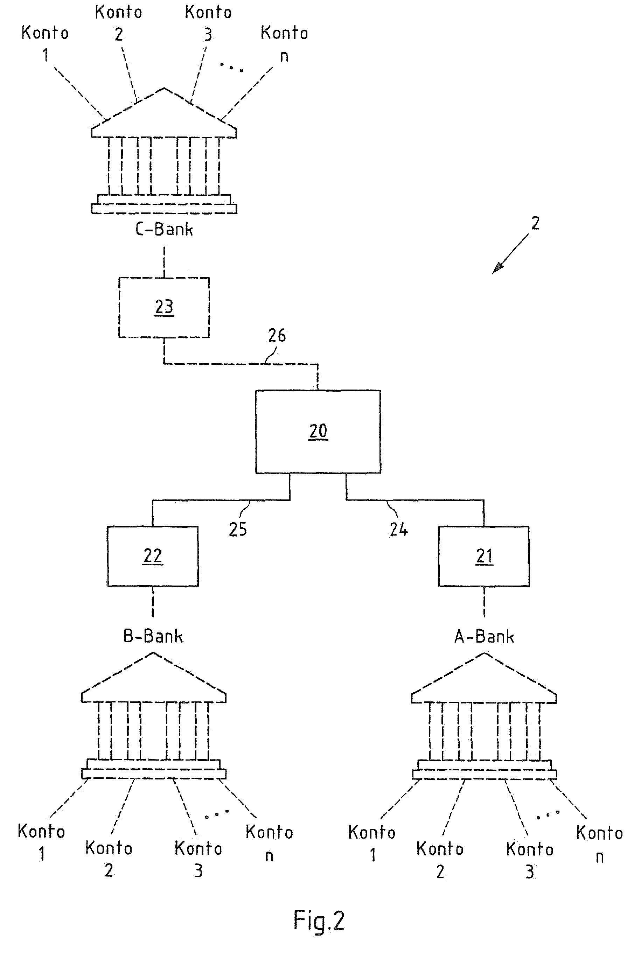

Fig. 2 zeigt ein Blockdiagramm eines beispielhaften Transaktionssystems 2. Transaktionssystem 2 umfasst eine Clearingentität 20, eine erste Entität 21, eine zweite Entität 22 und eine optionale dritte Entität 23. Neben der optionalen dritten Entität 23 kann Transaktionssystem 2 weitere optionale Entitäten umfassen. Die Clearingentität 20, die erste Entität 21, die zweite Entität 22 und die optionale dritte Entität 23 des Transaktionssystems umfassen beispielsweise jeweils eine oder mehrere Servervorrichtungen (z.B. einen oder mehrere Server).

Die erste Entität 21 ist über eine Netzwerkverbindung 24 mit der Clearingentität 20 verbunden. Die zweite Entität 22 ist über eine Netzwerkverbindung 25 mit der Clearingentität 20 verbunden. Die optionale dritte Entität 23 ist über eine Netzwerkverbindung 26 mit der Clearingentität 20 verbunden. Die Netzwerkverbindungen 24, 25 und 26 sind beispielsweise Netzwerkverbindungen über das Internet.

In Fig. 2 ist beispielhaft dargestellt, dass die erste Entität 21 des Transaktionssystems 2 mit den von der A-Bank geführten Konten assoziiert ist, die zweite Entität 22 des Transaktionssystems 2 mit den von der B-Bank geführten Konten assoziiert ist und die optionale dritte Entität 23 des Transaktionssystems 2 mit den von der C-Bank geführten Konten assoziiert ist. Die in diesem Zusammenhang in Fig. 2 dargestellte A-Bank, B-Bank und C-Bank mit den jeweiligen Konten sollen jedoch nicht als Teil des Transaktionssystems 2 verstanden werden.

Die erste Entität 21 des Transaktionssystems 2 ist beispielsweise eingerichtet, Transaktionen für die von der A-Bank geführten Konten zumindest teilweise auszuführen. Die zweite Entität 22 des Transaktionssystems 2 ist beispielsweise eingerichtet, Transaktionen für die von der B-Bank geführten Konten zumindest teilweise auszuführen. Die dritte Entität 23 des Transaktionssystems 2 ist beispielsweise eingerichtet, Transaktionen für die von der C-Bank geführten Konten zumindest teilweise auszuführen.

An Transaktionen zwischen Konten, die mit verschiedenen Entitäten des Transaktionssystems 2 assoziiert sind, ist im Transaktionssystem 2 beispielsweise stets die Clearingentität 20 als Clearingstelle beteiligt. Bei solchen Transaktionen findet somit stets eine Interbankenkommunikation zwischen der mit dem Sendekonto der Transaktion assoziierten Entität und der Clearingentität sowie zwischen der Clearingentität und der mit dem Empfangskonto der Transaktion assoziierten Entität statt. Bei Transaktionen zwischen Konten, die mit derselben Entität des Transaktionssystems 2 assoziiert sind, findet eine solche Interbankenkommunikation nicht statt.

Zum Beispiel sind die erste Entität 21, die zweite Entität 22 und die dritte Entität 23 eingerichtet entsprechende Transaktionsinformationen an die Clearingentität 20 zu senden und von der Clearingentität 20 zu empfangen und die Transaktionsinformationen zu verarbeiten. Die Clearingentität 20 ist beispielsweise eingerichtet, entsprechende Transaktionsinformationen von der ersten Entität 21, der zweiten Entität 22 und der dritten Entität 23 zu empfangen und an die erste Entität 21, die zweite Entität 22 und die dritte Entität 23 zu senden und die Transaktionsinformationen zu verarbeiten.

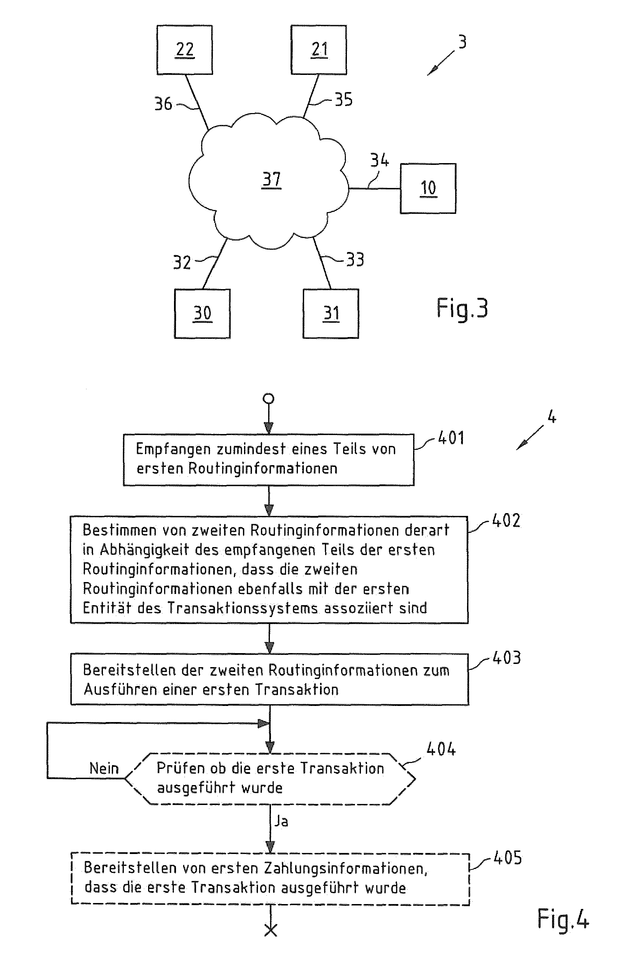

Fig. 3 zeigt ein Blockdiagramm einer beispielhaften Ausführungsform eines erfindungsgemäßen Systems 3. Das System 3 umfasst die in Fig. 1 dargestellte Steuerungsvorrichtung 10, die erste Entität 21 und die zweite Entität 22 des in Fig. 2 dargestellten Transaktionssystems 2, einen Server 30 und eine Datenverarbeitungsvorrichtung 31. Die Steuerungsvorrichtung 10, die erste Entität 21 und die zweite Entität 22, die Servervorrichtung 30 und die Datenverarbeitungsvorrichtung 31 sind jeweils über eine der Netzwerkverbindungen 32, 32, 34, 35 und 36 mit dem Internet 37und somit miteinander über Netzwerkverbindungen über das Internet 37 verbunden. Zum Beispiel ist die Servervorrichtung 30 ein Server und die Datenverarbeitungsvorrichtung 31 ein Benutzerendgerät wie ein Computer, ein Laptop oder ein Smartphone. Es ist jedoch auch denkbar, dass die Datenverarbeitungsvorrichtung 31 ein Transaktionsterminal wie ein Selbstbedienungs-Bankterminal und/oder ein Bezahlterminal ist. Zum Beispiel wird die Servervorrichtung 30 von einem Transaktionsempfänger (z.B. einem Verkäufer) verwendet. Zum Beispiel wird die Datenverarbeitungsvorrichtung 31 von einem Transaktionssender (z.B. einem Käufer) verwendet.

Fig. 4 zeigt ein Ablaufdiagramm 4 mit Schritten einer beispielhaften Ausführungsform des erfindungsgemäßen Verfahrens, die von der Steuerungsvorrichtung 10 gemäß Fig. 1 ausgeführt und/oder gesteuert werden. Zum Beispiel veranlassen Programmanweisungen eines im Programmspeicher 120 gespeicherten Computerprogramms, das von dem Prozessor 100 ausgeführt wird, das die Steuerungsvorrichtung 10 die Schritte des Ablaufdiagramms 4 ausführt und/oder steuert.

Im Folgenden werden die Schritte des Ablaufdiagramms 4 beispielhaft im Zusammenhang mit einer ersten Transaktion zwischen einem Transaktionssender (z.B. einem Käufer) und einem Transaktionssender (z.B. einem Verkäufer) bzw. einer ersten Transaktion zwischen einem Konto des Transaktionssenders (z.B. dem Verkäufer) und einem Konto des Transaktionsempfängers (z.B. dem Käufer) beschrieben. Die Erfindung ist jedoch nicht auf dieses Beispiel beschränkt. Die Steuerungsvorrichtung 10 wird beispielsweise von einem Diensteanbieter oder dem Transaktionsempfänger (z.B. dem Verkäufer) bereitgestellt.

In Schritt 401 wird zumindest ein Teil von ersten Routinginformationen empfangen.

Unter Empfangen zumindest eines Teils der ersten Routinginformationen soll vorliegend, wie oben ausführlich beschrieben, beispielsweise sowohl der Fall, dass (z.B. lediglich) ein Teil der ersten Routinginformationen empfangen wird, als auch der Fall, dass die ersten Routinginformationen (z.B. vollständig) empfangen werden, verstanden werden. Zum Beispiel werden die ersten Routinginformationen oder der Teil der ersten Routinginformationen in Schritt 401 durch die Netzwerkschnittstelle 130 an der Steuervorrichtung 10 empfangen. Zum einen ist beispielsweise denkbar, dass die ersten Routinginformationen oder der Teil der ersten Routinginformationen in Schritt 401 über die Netzwerkverbindungen 32 und 34 von der Servervorrichtung 30 an der der Steuervorrichtung 10 empfangen. Zum anderen ist beispielsweise denkbar, dass die ersten Routinginformationen oder der Teil der ersten Routinginformationen in Schritt 401 über die Netzwerkverbindungen 33 und 34 von der Datenverarbeitungsvorrichtung 31 an der der Steuervorrichtung 10 empfangen werden.

Wie oben ausführlich beschrieben, sollen unter Routinginformationen vorliegend beispielsweise Informationen zum Routen von Transaktionsinformationen einer Transaktion in einem Transaktionssystem verstanden werden. Die ersten Routinginformationen identifizieren das Sendekonto der ersten Transaktionen. Beispielsweise ist ein Konto des Transaktionssenders (z.B. des Käufers) das Sendekonto der ersten Transaktion. Die ersten Routinginformationen umfassen beispielsweise eine Kombination aus BLZ und Kontonummer oder eine Kombination aus BIC und IBAN. Zum Beispiel ist das Konto des Transaktionssenders (z.B. des Käufers) und die das Konto des Transaktionssenders (z.B. des Käufers) führende Bank anhand dieser Kombination eindeutig identifizierbar sind. Zum Beispiel ist das Konto des Transaktionssenders (z.B. des Käufers) das von der A-Bank geführte Konto 2 (vgl. Fig. 2).

Der empfangene Teil der ersten Routinginformationen ist ferner mit einer ersten Entität eines Transaktionssystems assoziiert. Zum Beispiel ist die erste Entität des Transaktionssystems anhand des in Schritt 401 empfangenen Teils der ersten Routinginformationen identifizierbar. Wenn das Konto des Transaktionssenders (z.B. des Käufers) das von der A-Bank geführte Konto 2 ist, ist die erste Entität 21 des Transaktionssystems 2 beispielsweise anhand der BLZ der A-Bank oder des BICs der A-Bank identifizierbar (vgl. Fig. 2). In diesem Fall umfasst der in Schritt 401 empfangene Teil der ersten Routinginformationen zumindest die BLZ der A-Bank oder den BIC der A-Bank.

In Schritt 402 werden zweite Routinginformationen derart zumindest teilweise in Abhängigkeit des empfangenen Teils der ersten Routinginformationen bestimmt, dass die zweiten Routinginformationen ebenfalls mit der ersten Entität des Transaktionssystems assoziiert sind. Zum Beispiel werden die zweiten Routinginformationen in Schritt 402 durch den Prozessor 100 der Steuerungsvorrichtung 10 bestimmt.

Die zweiten Routinginformationen identifizieren das Empfangskonto der ersten Transaktion. Beispielsweise ist ein Konto des Transaktionsempfängers (z.B. des Verkäufers) das Empfangskonto der ersten Transaktion. Die zweiten Routinginformationen umfassen beispielsweise eine Kombination aus BLZ und Kontonummer oder eine Kombination aus BIC und IBAN. Zum Beispiel ist das Konto des Transaktionsempfängers (z.B. des Verkäufers) und die das Konto des Transaktionsempfängers (z.B. des Verkäufers) führende Bank anhand dieser Kombination eindeutig identifizierbar sind.

Ferner sind die in Schritt 402 bestimmten Routinginformationen mit der ersten Entität des Transaktionssystems assoziiert. Zum Beispiel ist die erste Entität des Transaktionssystems anhand der in Schritt 402 bestimmten zweiten Routinginformationen oder eines Teils der in Schritt 402 bestimmten zweiten Routinginformationen identifizierbar. Wenn die erste Entität des Transaktionssystems die erste Entität 21 des Transaktionssystems 2 ist, ist die erste Entität 21 des Transaktionssystems 2, wie oben beschrieben, beispielsweise anhand der BLZ der A-Bank oder des BICs der A-Bank identifizierbar (vgl. Fig. 2). In diesem Fall umfassen die in Schritt 402 bestimmten zweiten Routinginformationen beispielsweise zumindest die BLZ der A-Bank oder den BIC der A-Bank.

Zum Beispiel umfasst das Bestimmen der zweiten Routinginformationen in Schritt 402 das Auswählen der zweiten Routinginformationen aus einer Mehrzahl von Routinginformationen. Zum Beispiel ist die Mehrzahl der Routinginformationen als Auswahlinformationen im Programmspeicher 120 der Steuerungsvorrichtung 10 gespeichert. Zum Beispiel identifizieren die Routinginformationen der Mehrzahl von Routinginformationen jeweils ein anderes Konto einer Mehrzahl von Konten des Transaktionsempfängers (z.B. des Verkäufers). Zum Beispiel sind die Konten der Mehrzahl von Konten des Transaktionsempfängers (z.B. des Verkäufers) das von der A-Bank geführte Konto 1, das von der B-Bank geführte Konto 1 und das von der C-Bank geführte Konto 1. Zum Beispiel werden die zweiten Routinginformationen aus der Mehrzahl der Routinginformationen derart ausgewählt, dass sie wie die ersten Routinginformationen mit der ersten Entität des Transaktionssystems assoziiert sind. Wenn die erste Entität des Transaktionssystems die erste Entität 21 des Transaktionssystems 2 ist, werden beispielsweise die Routinginformationen der Mehrzahl von Routinginformationen als zweite Routinginformationen ausgewählt, die das von der A-Bank geführte Konto 1 des Transaktionsempfängers (z.B. des Verkäufers) identifizieren. In diesem Fall umfassen die in Schritt 402 bestimmten zweiten Routinginformationen beispielsweise eine Kombination aus BLZ und Kontonummer oder eine Kombination aus BIC und IBAN, anhand derer das von der A-Bank geführte Konto 1 des Transaktionsempfängers (z.B. des Verkäufers) eindeutig identifizierbar ist.

In Schritt 403 werden die zweiten Routinginformationen zum Ausführen der ersten Transaktion bereitgestellt. Wie oben ausführlich beschrieben, soll unter Bereitstellen der zweiten Routinginformationen zum Ausführen der ersten Transaktion durch die Steuerungsvorrichtung vorliegend beispielsweise verstanden werden, dass die zweiten Routinginformationen derart bereitgestellt werden, dass die Transaktion zumindest teilweise in Abhängigkeit der zweiten Routinginformationen ausführbar ist.

Zum Beispiel umfasst das Bereitstellen der zweiten Routinginformationen zum Ausführen der ersten Transaktion in Schritt 403 das Bereitstellen der zweiten Routinginformationen durch den Prozessor 100 der Steuerungsvorrichtung 10 und/oder das Senden der zweiten Routinginformationen durch die Netzwerkschnittstelle 130 von der Steuerungsvorrichtung 10. Zum Beispiel werden die zweiten Routinginformationen in Schritt 403 von der Steuerungsvorrichtung 10 an eine oder mehrere der ersten Entität 21 des Transaktionssystems 2, die Servervorrichtung 30 und/oder die Datenverarbeitungsvorrichtung 31 gesendet.

Zum Beispiel werden die zweiten Routinginformationen in Schritt 403 in Form von Transaktionsinformationen der ersten Transaktion bereitgestellt. Zum Beispiel umfasst das Bereitstellen der zweiten Routinginformationen in Schritt 403 das Erstellen, der Transaktionsinformationen der ersten Transaktion zumindest teilweise in Abhängigkeit der der ersten Routinginformationen und/oder zweiten Routinginformationen. Zum Beispiel umfassen die Transaktionsinformationen der ersten Transaktion die ersten Routinginformationen und/oder die zweiten Routinginformationen zumindest teilweise. Zum Beispiel sind die Transaktionsinformationen der ersten Transaktion eine Nachricht gemäß dem ISO 20022 Standard, eine Datei gemäß den technischen Spezifikationen des EBICS-Systems und/oder eine SEPA-Datei gemäß den technischen Spezifikationen des European Payments Councils.

Wenn die erste Transaktion eine Überweisung (z.B. eine SEPA-Überweisung) ist, werden die Transaktionsinformationen der ersten Transaktion in Schritt 403 beispielsweise derart bereitgestellt, dass der Transaktionssender (z.B. der Käufer) die Überweisung veranlassen und/oder autorisieren kann. In diesem Fall werden die Transaktionsinformationen der ersten Transaktion in Schritt 403 von der Steuerungsvorrichtung 10 beispielsweise an die die Servervorrichtung 30 über die Netzwerkverbindungen 34 und 32 und/oder die Datenverarbeitungsvorrichtung 31 über die Netzwerkverbindungen 34 und 33 gesendet. Alternativ können in diesem Fall die Transaktionsinformationen der ersten Transaktion in Schritt 403 von der Steuerungsvorrichtung 10 beispielsweise an die erste Entität 21 des Transaktionssystems 2 über die Netzwerkverbindungen 34 und 35 gesendet werden und ein Verweis zum Autorisieren der Überweisung von der Steuerungsvorrichtung 10 beispielsweise an die die Servervorrichtung 30 über die Netzwerkverbindungen 34 und 32 und/oder die Datenverarbeitungsvorrichtung 31 über die Netzwerkverbindungen 34 und 33 gesendet werden. Der Verweis kann zum Beispiel ein Verweis auf eine von der ersten Entität 21 des Transaktionssystems 2 bereitgestellte Online-Banking-Webseite (z.B. eine Online-Banking-Webseite mit einem vorausgefüllten Überweisungsformular) sein.

Wenn die erste Transaktion dagegen eine Lastschrift (z.B. eine SEPA-Lastschrift) ist, werden die Transaktionsinformationen der ersten Transaktion in Schritt 403 beispielsweise derart bereitgestellt, dass die erste Entität des Transaktionssystems die Lastschrift ausführen kann. In diesem Fall werden die Transaktionsinformationen der ersten Transaktion in Schritt 403 von der Steuerungsvorrichtung 10 beispielsweise an die erste Entität 21 des Transaktionssystems 2 über die Netzwerkverbindungen 34 und 35 gesendet.

In einem optionalen Schritt 404 wird geprüft, ob die erste Transaktion ausgeführt wurde.

Zum Beispiel umfasst das Prüfen in Schritt 404, ob die erste Transaktion ausgeführt wurde, das Senden einer Prüfanfrage an die erste Entität des Transaktionssystems. Zum Beispiel sendet die Netzwerkschnittstelle 130 der Steuerungsvorrichtung 10 in Schritt 404 die Prüfanfrage an die erste Entität 21 des Transaktionssystems 2 über die Netzwerkverbindungen 34 und 35. Zum Beispiel umfasst das Prüfen in Schritt 404, ob die erste Transaktion ausgeführt wurde, ferner das Empfangen von Prüfinformationen als Antwort auf die Prüfanfrage von der ersten Entität des Transaktionssystems. Zum Beispiel empfängt die Netzwerkschnittstelle 130 der Steuerungsvorrichtung 10 in Schritt 404 die Prüfinformationen von der ersten Entität 21 des Transaktionssystems 2 über die Netzwerkverbindungen 34 und 35. Die Prüfinformationen können beispielsweise Kontoauszugsinformationen (z.B. einen Kontoauszug oder einen Teil eines Kontoauszugs), Guthabeninformationen, Umsatzinformationen und/oder Zahlungseingangsinformationen des Empfangskontos der ersten Transaktion umfassen.

Wenn das Prüfen in Schritt 404 ergibt, dass die erste Transaktion ausgeführt wurde, wird das Ablaufdiagramm 4 mit dem optionalen Schritt 405 fortgesetzt. Andernfalls wird Schritt 404 wiederholt.

In einem optionalen Schritt 405 werden erste Zahlungsinformationen bereitgestellt, dass die erste Transaktion ausgeführt wurde. Zum Beispiel umfasst das Bereitstellen der ersten Zahlungsinformationen in Schritt 405 das Bereitstellen der ersten Zahlungsinformationen durch den Prozessor 100 der Steuerungsvorrichtung 10 und/oder das Senden der ersten Zahlungsinformationen durch die Netzwerkschnittstelle 130 der Steuerungsvorrichtung 10. Zum Beispiel werden die ersten Zahlungsinformationen in Schritt 405 von der Steuerungsvorrichtung 10 beispielsweise an die Servervorrichtung 30 über die Netzwerkverbindungen 34 und 32 gesendet.

Durch das Bestimmen (vgl. Schritt 402) und das Bereitstellen (vgl. Schritt 403) der zweiten Routinginformationen kann die Ausführung der ersten Transaktion beispielsweise unter anderem derart gesteuert werden, dass bei der Ausführung der ersten Transaktion keine Kommunikation zwischen mehreren Entitäten des Transaktionssystems 2 stattfindet und die erste Transaktion vollständig von der ersten Entität 21 des Transaktionssystems 2 ausführbar ist. Dadurch kann die für die Ausführung der ersten Transaktion notwendige Ausführungszeit verringert werden und die übrigen Entitäten des Transaktionssystems 2 können von der Ausführung der ersten Transaktion entlastet werden. Die in Fig. 4 dargestellte beispielhafte Ausführungsform des erfindungsgemäßen Verfahrens ist deshalb beispielsweise vorteilhaft, um die Ausführung der ersten Transaktion in dem Transaktionssystem 2 zu optimieren und die für die Ausführung der ersten Transaktion notwendigen Ressourcen des Transaktionssystems 2 zu minimieren.

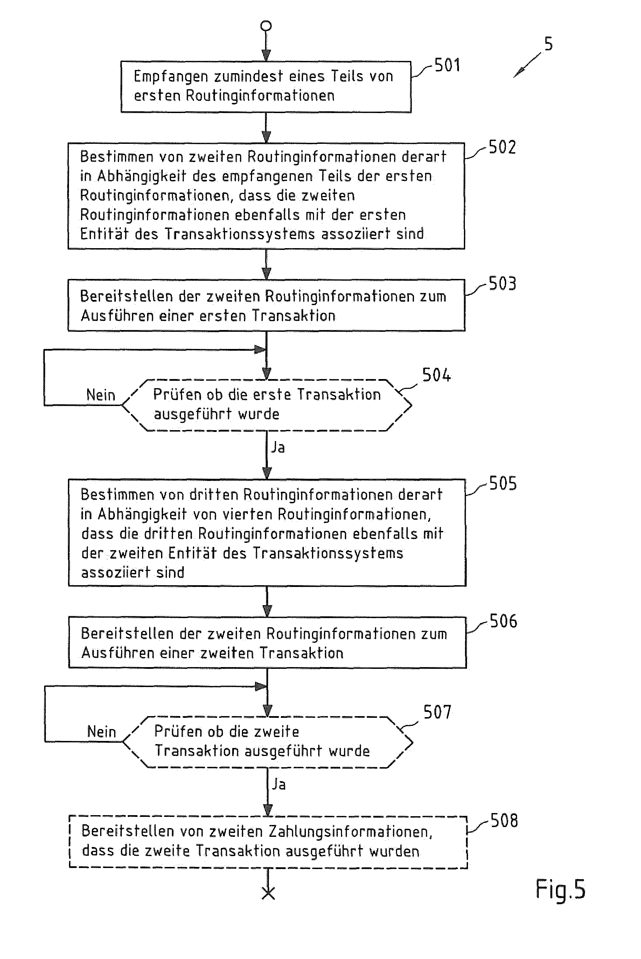

Fig. 5 zeigt ein Ablaufdiagramm 5 mit Schritten einer beispielhaften Ausführungsform des erfindungsgemäßen Verfahrens, die von der Steuerungsvorrichtung 10 gemäß Fig. 1 ausgeführt und/oder gesteuert werden. Zum Beispiel veranlassen Programmanweisungen eines im Programmspeicher 120 gespeicherten Computerprogramms, das von dem Prozessor 100 ausgeführt wird, das die Steuerungsvorrichtung 10 die Schritte des Ablaufdiagramms 5 ausführt und/oder steuert.

Im Folgenden werden die Schritte des Ablaufdiagramms 5 beispielhaft im Zusammenhang mit einer ersten Transaktion zwischen einem Transaktionssender (z.B. einem Käufer) und einem Diensteanbieter bzw. einer ersten Transaktion zwischen einem Konto des Transaktionssenders (z.B. des Käufers) und einem Konto des Diensteanbieters und im Zusammenhang mit einer zweiten Transaktion zwischen dem Diensteanbieter und einem Transaktionsempfänger (z.B. einem Verkäufer) bzw. einer zweiten Transaktion zwischen einem Konto des Diensteanbieters und einem Konto des Transaktionsempfängers (z.B. des Verkäufers) beschrieben. Die Steuervorrichtung 10 wird beispielsweise von dem Diensteanbieter bereitgestellt. Die Erfindung ist jedoch nicht auf dieses Beispiel beschränkt.

In einem Schritt 501 wird zumindest ein Teil von ersten Routinginformationen empfangen. Der Schritt 501 entspricht dem oben beschriebenen Schritt 401 des Ablaufdiagramms 4.

In einem Schritt 502 werden zweite Routinginformationen derart zumindest teilweise in Abhängigkeit des empfangenen Teils der ersten Routinginformationen bestimmt, dass die zweiten Routinginformationen ebenfalls mit der ersten Entität des Transaktionssystems assoziiert sind. Zum Beispiel werden die zweiten Routinginformationen in Schritt 505 durch den Prozessor 100 der Steuerungsvorrichtung 10 bestimmt.

Der Schritt 502 entspricht im Wesentlichen dem oben beschriebenen Schritt 402 des Ablaufdiagramms 4.

Die zweiten Routinginformationen identifizieren das Empfangskonto der ersten Transaktion. Beispielsweise ist ein Konto des Diensteanbieters das Empfangskonto der ersten Transaktion. Die zweiten Routinginformationen umfassen beispielsweise eine Kombination aus BLZ und Kontonummer oder eine Kombination aus BIC und IBAN. Zum Beispiel ist das Konto des Diensteanbieters und die das Konto des Diensteanbieters führende Bank anhand dieser Kombination eindeutig identifizierbar sind.

Ferner sind die in Schritt 502 bestimmten Routinginformationen mit der ersten Entität des Transaktionssystems assoziiert. Zum Beispiel ist die erste Entität des Transaktionssystems anhand der in Schritt 502 bestimmten zweiten Routinginformationen oder eines Teils der in Schritt 502 bestimmten zweiten Routinginformationen identifizierbar. Wenn die erste Entität des Transaktionssystems die erste Entität 21 des Transaktionssystems 2 ist, ist die erste Entität 21 des Transaktionssystems 2, wie oben beschrieben, beispielsweise anhand der BLZ der A-Bank oder des BICs der A-Bank identifizierbar (vgl. Fig. 2). In diesem Fall umfassen die in Schritt 502 bestimmten zweiten Routinginformationen beispielsweise zumindest die BLZ der A-Bank oder den BIC der A-Bank.

Zum Beispiel umfasst das Bestimmen der zweiten Routinginformationen in Schritt 502 das Auswählen der zweiten Routinginformationen aus einer Mehrzahl von Routinginformationen. Zum Beispiel ist die Mehrzahl der Routinginformationen als Auswahlinformationen im Programmspeicher 120 der Steuerungsvorrichtung 10 gespeichert. Zum Beispiel identifizieren die Routinginformationen der Mehrzahl von Routinginformationen jeweils ein anderes Konto einer Mehrzahl von Konten des Diensteanbieters. Zum Beispiel sind die Konten der Mehrzahl von Konten des Diensteanbieters das von der A-Bank geführte Konto 1, das von der B-Bank geführte Konto 1 und das von der C-Bank geführte Konto 1. Zum Beispiel werden die zweiten Routinginformationen aus der Mehrzahl der Routinginformationen derart ausgewählt, dass sie wie die ersten Routinginformationen mit der ersten Entität des Transaktionssystems assoziiert sind. Wenn die erste Entität des Transaktionssystems die erste Entität 21 des Transaktionssystems 2 ist, werden beispielsweise die Routinginformationen der Mehrzahl von Routinginformationen als zweite Routinginformationen ausgewählt, die das von der A-Bank geführte Konto 1 des Diensteanbieters identifizieren. In diesem Fall umfassen die in Schritt 502 bestimmten zweiten Routinginformationen beispielsweise eine Kombination aus BLZ und Kontonummer oder eine Kombination aus BIC und IBAN, anhand derer das von der A-Bank geführte Konto 1 des Diensteanbieters eindeutig identifizierbar ist.

In Schritt 503 werden die zweiten Routinginformationen zum Ausführen der ersten Transaktion bereitgestellt. Der Schritt 503 entspricht dem oben beschriebenen Schritt 403 des Ablaufdiagramm 4.

In einem optionalen Schritt 504 wird geprüft, ob die erste Transaktion ausgeführt wurde. Der Schritt 504 entspricht dem oben beschriebenen Schritt 404 des Ablaufdiagramms 4.

Wenn das Prüfen in Schritt 504 ergibt, dass die erste Transaktion ausgeführt wurde, wird das Ablaufdiagramm 5 mit Schritt 505 fortgesetzt. Andernfalls wird beispielsweise Schritt 504 wiederholt.

In einem Schritt 505 werden dritte Routinginformationen derart in Abhängigkeit von vierten Routinginformationen bestimmt, dass die dritten Routinginformationen ebenfalls mit der zweiten Entität des Transaktionssystems assoziiert sind.

Die vierten Routinginformationen identifizieren das Empfangskonto der zweiten Transaktionen. Beispielsweise ist ein Konto des Transaktionsempfängers (z.B. des Verkäufers) das Empfangskonto der zweiten Transaktion. Die vierten Routinginformationen umfassen beispielsweise eine Kombination aus BLZ und Kontonummer oder eine Kombination aus BIC und IBAN. Zum Beispiel ist das Konto des Transaktionsempfängers (z.B. des Verkäufers) und die das Konto des Transaktionsempfängers (z.B. des Verkäufers) führende Bank anhand dieser Kombination eindeutig identifizierbar. Zum Beispiel ist das Konto des Transaktionsempfängers (z.B. des Verkäufers) das von der B-Bank geführte Konto 2 (vgl. Fig. 2).

Die vierten Routinginformationen sind ferner mit einer zweiten Entität des Transaktionssystems assoziiert. Zum Beispiel ist die zweite Entität des Transaktionssystems anhand der vierten Routinginformationen identifizierbar. Wenn das Konto des Transaktionsempfängers (z.B. des Verkäufers) das von der B-Bank geführte Konto 2 ist, ist die zweite Entität 22 des Transaktionssystems 2 beispielsweise anhand der BLZ der B-Bank oder des BICs der B-Bank identifizierbar (vgl. Fig. 2). In diesem Fall umfassen die vierten Routinginformationen beispielsweise zumindest die BLZ der B-Bank oder den BIC der B-Bank.

Die dritten Routinginformationen identifizieren das Sendekonto der zweiten Transaktion. Beispielsweise ist ein Konto des Diensteanbieters das Sendekonto der zweiten Transaktion. Die dritten Routinginformationen umfassen beispielsweise eine Kombination aus BLZ und Kontonummer oder eine Kombination aus BIC und IBAN. Zum Beispiel ist das Konto des Diensteanbieters und die das Konto des Diensteanbieters führende Bank anhand dieser Kombination eindeutig identifizierbar.

Ferner sind die in Schritt 505 bestimmten dritten Routinginformationen mit der zweiten Entität des Transaktionssystems assoziiert. Zum Beispiel ist die zweite Entität des Transaktionssystems anhand der in Schritt 505 bestimmten dritten Routinginformationen oder eines Teils der in Schritt 505 bestimmten dritten Routinginformationen identifizierbar. Wenn die zweite Entität des Transaktionssystems die zweite Entität 22 des Transaktionssystems 2 ist, ist die zweite Entität 22 des Transaktionssystems 2, wie oben beschrieben, beispielsweise anhand der BLZ der B-Bank oder des BICs der B-Bank identifizierbar (vgl. Fig. 2). In diesem Fall umfassen die in Schritt 505 bestimmten dritten Routinginformationen beispielsweise zumindest die BLZ der B-Bank oder den BIC der B-Bank.

Zum Beispiel umfasst das Bestimmen der dritten Routinginformationen in Schritt 505 das Auswählen der dritten Routinginformationen aus einer Mehrzahl von Routinginformationen. Zum Beispiel ist die Mehrzahl der Routinginformationen als Auswahlinformationen im Programmspeicher 120 der Steuerungsvorrichtung 10 gespeichert. Zum Beispiel identifizieren die Routinginformationen der Mehrzahl von Routinginformationen jeweils ein anderes Konto einer Mehrzahl von Konten des Diensteanbieters. Zum Beispiel sind die Konten der Mehrzahl von Konten des Diensteanbieters das von der A-Bank geführte Konto 1, das von der B-Bank geführte Konto 1 und das von der C-Bank geführte Konto 1. Zum Beispiel werden die dritten Routinginformationen aus der Mehrzahl der Routinginformationen derart ausgewählt, dass sie wie die vierten Routinginformationen mit der zweiten Entität des Transaktionssystems assoziiert sind. Wenn die zweite Entität des Transaktionssystems die zweite Entität 22 des Transaktionssystems 2 ist, werden beispielsweise die Routinginformationen der Mehrzahl von Routinginformationen als dritte Routinginformationen ausgewählt, die das von der B-Bank geführte Konto 1 des Diensteanbieters identifizieren. In diesem Fall umfassen die in Schritt 505 bestimmten dritten Routinginformationen beispielsweise eine Kombination aus BLZ und Kontonummer oder eine Kombination aus BIC und IBAN, anhand derer das von der B-Bank geführte Konto 1 des Diensteanbieters eindeutig identifizierbar ist.

In Schritt 506 werden die dritten Routinginformationen zum Ausführen der ersten Transaktion bereitgestellt. Wie oben ausführlich beschrieben, soll unter Bereitstellen der dritten Routinginformationen zum Ausführen der zweiten Transaktion durch die Steuerungsvorrichtung vorliegend beispielsweise verstanden werden, dass die dritten Routinginformationen derart bereitgestellt werden, dass die Transaktion zumindest teilweise in Abhängigkeit der dritten Routinginformationen ausführbar ist.

Der Schritt 506 entspricht im Wesentlichen dem oben beschriebenen Schritt 403 des Ablaufdiagramms 4.

Zum Beispiel umfasst das Bereitstellen der dritten Routinginformationen zum Ausführen der zweiten Transaktion in Schritt 506 das Bereitstellen der dritten Routinginformationen durch den Prozessor 100 der Steuerungsvorrichtung 10 und/oder das Senden der dritten Routinginformationen durch die Netzwerkschnittstelle 130 von der Steuerungsvorrichtung 10. Zum Beispiel werden die dritten Routinginformationen in Schritt 506 von der Steuerungsvorrichtung 10 an die zweite Entität 22 des Transaktionssystems 2 und/oder die Servervorrichtung 30 gesendet.

Zum Beispiel werden die zweiten Routinginformationen in Schritt 506 in Form von Transaktionsinformationen der zweiten Transaktion bereitgestellt. Zum Beispiel umfasst das Bereitstellen der zweiten Routinginformationen in Schritt 506 das Erstellen, der Transaktionsinformationen der zweiten Transaktion zumindest teilweise in Abhängigkeit der dritten Routinginformationen und/oder der vierten Routinginformationen. Zum Beispiel umfassen die Transaktionsinformationen der zweiten Transaktion die dritten Routinginformationen und/oder die vierten Routinginformationen zumindest teilweise. Zum Beispiel sind die Transaktionsinformationen der zweiten Transaktion eine Nachricht gemäß dem ISO 20022 Standard, eine Datei gemäß den technischen Spezifikationen des EBICS-Systems und/oder eine SEPA-Datei gemäß den technischen Spezifikationen des European Payments Councils.

Zum Beispiel werden die Transaktionsinformationen der zweiten Transaktion in Schritt 506 derart bereitgestellt, dass die zweite Entität des Transaktionssystems die Überweisung ausführen kann. Zum Beispiel werden die Transaktionsinformationen der ersten Transaktion in Schritt 506 von der Steuerungsvorrichtung 10 beispielsweise an die zweite Entität 22 des Transaktionssystems 2 über die Netzwerkverbindungen 34 und 36 gesendet. Wenn die Transaktion eine Überweisung ist, kann die Überweisung ferner beispielsweise automatisch durch die Steuerungsvorrichtung 10 autorisiert werden.

In einem optionalen Schritt 507 wird geprüft, ob die zweite Transaktion ausgeführt wurde. Der Schritt 507 entspricht im Wesentlichen dem oben beschriebenen Schritt 404 des Ablaufdiagramms 4.

Zum Beispiel umfasst das Prüfen in Schritt 507, ob die zweite Transaktion ausgeführt wurde, das Senden einer Prüfanfrage an die zweite Entität des Transaktionssystems. Zum Beispiel sendet die Netzwerkschnittstelle 130 der Steuerungsvorrichtung 10 in Schritt 507 die Prüfanfrage an die zweite Entität 22 des Transaktionssystems 2 über die Netzwerkverbindungen 34 und 36. Zum Beispiel umfasst das Prüfen in Schritt 507, ob die zweite Transaktion ausgeführt wurde, ferner das Empfangen von Prüfinformationen als Antwort auf die Prüfanfrage von der zweiten Entität des Transaktionssystems. Zum Beispiel empfängt die Netzwerkschnittstelle 130 der Steuerungsvorrichtung 10 in Schritt 507 die Prüfinformationen von der zweiten Entität 22 des Transaktionssystems 2 über die Netzwerkverbindungen 34 und 36. Die Prüfinformationen können beispielsweise Kontoauszugsinformationen (z.B. ein Kontoauszug oder ein Teil eines Kontoauszugs), Guthabeninformationen, Umsatzinformationen und/oder Zahlungseingangsinformationen des Empfangskontos der ersten Transaktion umfassen.

Wenn das Prüfen in Schritt 507 ergibt, dass die erste Transaktion ausgeführt wurde, wird das Ablaufdiagramm 4 mit dem optionalen Schritt 508 fortgesetzt. Andernfalls wird beispielsweise Schritt 507 wiederholt.

In einem optionalen Schritt 508 werden zweite Zahlungsinformationen bereitgestellt, dass die zweite Transaktion ausgeführt wurde. Der Schritt 508 entspricht im Wesentlichen dem oben beschriebenen Schritt 405 des Ablaufdiagramms 4.

Zum Beispiel umfasst das Bereitstellen der zweiten Zahlungsinformationen in Schritt 508 das Bereitstellen der zweiten Zahlungsinformationen durch den Prozessor 100 der Steuerungsvorrichtung 10 und/oder das Senden der zweiten Zahlungsinformationen durch die Netzwerkschnittstelle 130 der Steuerungsvorrichtung 10. Zum Beispiel werden die zweiten Zahlungsinformationen in Schritt 508 von der Steuerungsvorrichtung 10 beispielsweise an die Servervorrichtung 30 über die Netzwerkverbindungen 34 und 32 gesendet.

Das Bestimmen (vgl. Schritt 502 und 505) und Bereitstellen (503 und 506) der zweiten Transaktionsinformationen und der dritten Transaktionsinformationen kann die Ausführung der ersten und zweiten Transaktion unter anderem beispielsweise derart gesteuert werden, dass bei der Ausführung der ersten Transaktion und der zweiten Transaktion keine Kommunikation zwischen mehreren Entitäten des Transaktionssystems 2 stattfindet, die erste Transaktion vollständig von der ersten Entität 21 des Transaktionssystems 2 ausführbar ist und die zweite Transaktion vollständig von der zweiten Entität 21 des Transaktionssystems 2 ausführbar ist.

Die in Fig. 5 dargestellte beispielhafte Ausführungsform des erfindungsgemäßen Verfahrens ist beispielsweise vorteilhaft, wenn das Empfangskonto des Transaktionsempfängers (z.B. des Verkäufers) und das Sendekonto des Transaktionssenders (z.B. des Käufers) nicht mit derselben Entität des Transaktionssystems 2 assoziiert sind. In diesem Fall kann eine Transaktion zur Begleichung einer Zahlungsforderung zwischen dem Transaktionsempfänger und dem Transaktionssender in die erste Transaktion und die zweite Transaktion aufgespalten werden, so dass auch in diesem Fall keine Kommunikation zwischen mehreren Entitäten des Transaktionssystems 2 bei der Ausführung der Transaktionen stattfindet. Ferner ist die in Fig. 5 dargestellte beispielhafte Ausführungsform des erfindungsgemäßen Verfahrens beispielsweise vorteilhaft, um das erfindungsgemäße Verfahren einem oder mehreren Benutzern (z.B. einem oder mehreren Verkäufern) als Dienst eines Diensteanbieters anzubieten, da die Benutzer nur ein Konto benötigen.

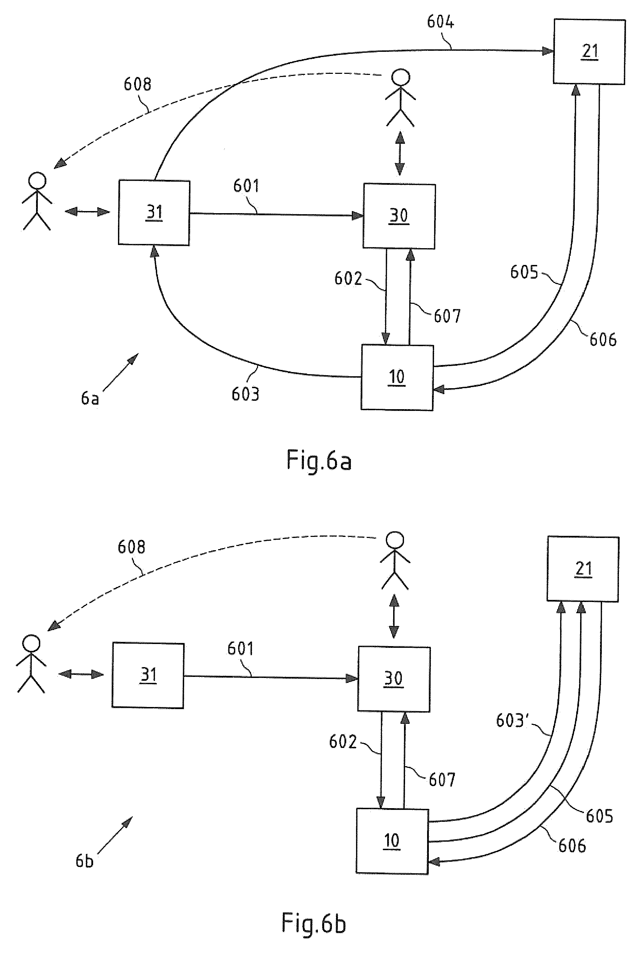

Im Folgenden werden die beispielhaften Kommunikationsschritte der in Fig. 6a und 6b dargestellten Blockdiagramme 6a und 6b beim Ablauf der beispielhaften Ausführungsform des erfindungsgemäßen Verfahrens gemäß Fig. 4 in der beispielhaften Ausführungsform des erfindungsgemäßen Systems gemäß Fig. 3 im Zusammenhang mit einer ersten Transaktion zwischen einem Käufer und einem Verkäufe bzw. einer ersten Transaktion zwischen einem Konto des Verkäufers und einem Konto des Käufers beschrieben. Die Steuerungsvorrichtung 10 wird in diesem Beispiel von einem Diensteanbieter bereitgestellt. Die Servervorrichtung 30 wird in diesem Beispiel von dem Verkäufer verwendet. Die Datenverarbeitungsvorrichtung 31 wird in diesem Beispiel von dem Käufer verwendet. Die Erfindung ist jedoch nicht auf dieses Beispiel beschränkt.

Fig. 6a zeigt ein Blockdiagramm 6a mit beispielhaften Kommunikationsschritten, wenn die erste Transaktion eine Überweisung ist.

In Schritt 601 werden erste Routinginformationen von der Datenverarbeitungsvorrichtung 31 an die Servervorrichtung 30 gesendet und dort empfangen. Zum Beispiel greift der Käufer in Schritt 601 durch die Datenverarbeitungsvorrichtung 31 auf eine von der Servervorrichtung 30 bereitgestellte Verkäufer-Webseite zu und gibt auf der Verkäufer-Webseite die ersten Routinginformationen als Bezahlinformationen für den Kauf eines Produkts an. Die ersten Routinginformationen identifizieren beispielsweise das von der A-Bank geführte Konto 2 des Käufers und sind mit der ersten Entität 21 des Transaktionssystems 2 assoziiert. Es ist jedoch auch denkbar, dass in Schritt 601 nur ein Teil der ersten Routinginformationen von der Datenverarbeitungsvorrichtung 31 an die Servervorrichtung 30 gesendet und dort empfangen wird (z.B. nur der Teil der ersten Routinginformation, anhand dessen die A-Bank identifizierbar ist).

In Schritt 602 werden die ersten Routinginformationen von der Servervorrichtung 30 an die Steuerungsvorrichtung 10 gesendet und dort empfangen (vgl. Schritt 401). Anschließend bestimmt die Steuerungsvorrichtung zweite Routinginformationen beispielsweise derart in Abhängigkeit von den ersten Routinginformationen, dass die zweiten Routinginformationen wie die ersten Routinginformationen mit der ersten Entität 21 des Transaktionssystems 2 assoziiert sind (vgl. Schritt 402). Die zweiten Routinginformationen identifizieren beispielsweise das von der A-Bank geführte Konto 1 des Verkäufers und sind mit der ersten Entität 21 des Transaktionssystems 2 assoziiert.

In Schritt 603 wird ein Verweis zum Autorisieren der Überweisung von der Steuerungsvorrichtung 10 unmittelbar an die Datenverarbeitungsvorrichtung 31 oder über die Servervorrichtung 30 an die Datenverarbeitungsvorrichtung 31 gesendet und dort empfangen. Der Verweis kann zum Beispiel ein Verweis auf eine von der ersten Entität 21 des Transaktionssystems 2 bereitgestellte Online-Banking-Seite mit einem vorausgefüllten Überweisungsformular sein. Die Überweisung ist beispielsweise eine Überweisung vom von der A-Bank geführten Konto 2 des Käufers auf das von der A-Bank geführte Konto 1 des Verkäufers.

In Schritt 604 werden Autorisierungsinformationen zur Autorisierung der Überweisung von der Datenverarbeitungseinrichtung 31 an die erste Entität 21 des Transaktionssystems 2 gesendet und dort empfangen. Zum Beispiel greift der Käufer in Schritt 604 durch die Datenverarbeitungsvorrichtung 31 auf eine von der ersten Entität 21 des Transaktionssystems bereitgestellte Online-Banking-Webseite zu und gibt auf der Online-Banking-Webseite die Autorisierungsinformationen zur Autorisierung der Überweisung ein. Anschließend führt die erste Entität 21 des Transaktionssystems 2 beispielsweise die Überweisung aus.

In Schritt 605 sendet die Steuerungsvorrichtung 10 an die erste Entität 21 des Transaktionssystems 2 eine Prüfanfrage, ob die Transaktion ausgeführt wurde (vgl. Schritt 404). In Schritt 606 empfängt die Steuerungsvorrichtung 10 von der ersten Entität 21 des Transaktionssystems 2 Prüfinformationen, ob die Transaktion ausgeführt wurde (vgl. Schritt 404).

Wenn die Transaktion ausgeführt wurde, werden in Schritt 607 Zahlungsinformationen, dass die Transaktion ausgeführt wurde, von der Steuerungsvorrichtung 10 an die Servervorrichtung 30 gesendet und dort empfangen (vgl. Schritt 405).

Anschließend veranlasst die Servervorrichtung beispielsweise, dass das gekaufte Produkt in Schritt 608 von dem Verkäufer an den Käufer ausgeliefert wird.

Fig. 6b zeigt ein Blockdiagramm 6b mit beispielhaften Kommunikationsschritten, wenn die erste Transaktion eine Lastschrift ist.

Die Kommunikationsschritte 601 bis 602 und 605 bis 608 des Blockdiagramms 6b entsprechen den Kommunikationsschritten 601 bis 602 und 605 bis 608 des Blockdiagramms 6a.

Alternativ zu den Kommunikationsschritten 603 und 604 des Blockdiagramms 6a, die die Überweisung betreffen, läuft in Blockdiagramm 6b der Kommunikationsschritt 603' ab, der die Lastschrift betrifft.

In Schritt 603' werden Transaktionsinformationen zur Ausführung der Lastschrift von der Steuerungsvorrichtung 10 an die erste Entität 21 des Transaktionssystems 2 gesendet und dort empfangen (vgl. Schritt 403). Die Transaktionsinformationen umfassen beispielsweise die ersten Routinginformationen und die zweiten Routinginformationen. Anschließend führt die erste Entität 21 des Transaktionssystems 2 beispielsweise die Lastschrift aus. Die Lastschrift ist beispielsweise eine Lastschrift vom von der A-Bank geführten Konto 2 des Käufers auf das von der A-Bank geführte Konto 1 des Verkäufers.

Die vorliegende Erfindung (insbesondere das erfindungsgemäße Verfahren und/oder die erfindungsgemäße Steuerungsvorrichtung) stellt beispielsweise ein vorteilhaftes Back-Office-System für e-commerce-Bezahlverfahren (z.B. Online-Bezahlverfahren) zur Verfügung, das keinerlei offene Punkte bezüglich Funktionalität zur Abwicklung von Interbankenzahlungen hat. Zum Beispiel kann die erfindungsgemäße Steuerungsvorrichtung wie Online-Banking juristisch durch den Händler/Verkäufer selbst betrieben und in seine Prozesse integriert werden. Da der Händler/Verkäufer juristisch Eigenanwender wird, werden Fremdgebühren und -risiken minimiert. Alternativ ist jedoch auch denkbar, dass die erfindungsgemäße Steuerungsvorrichtung von einem Diensteanbieter für einen oder mehrere Händler/Verkäufer bereitgestellt wird, so dass der Diensteanbieter beispielsweise als sogenannter Payment Service Provider (PSP) für die Händler/Verkäufer agiert. Die vorliegende Erfindung ist jedoch nicht auf e-commerce-Bezahlverfahren beschränkt und kann beispielsweise auch im Rahmen von anderen Transaktionen wie Transaktionen, die an einem Transaktionsterminal wie einem Selbstbedienungs-Bankterminal und/oder einem Bezahlterminal von einem Benutzer autorisiert werden, angewendet werden.

Die vorliegende Erfindung ermöglicht zum Beispiel die Beschleunigung von bisher tagelangen, bzw. bei Subsystemen nicht selten wochenlangen, Bezahlprozessen auf weniger als 1 Stunde (z.B. weniger als 60 Sekunden, vorzugsweise weniger als 30 Sekunden, besonders vorzugsweise weniger als 10 Sekunden). Hierdurch wird der Rechenaufwand für die Abwicklung der Verkaufsprozesse beispielsweise verringert und beispielsweise gleichzeitig die Liquidität des Händlers/Verkäufers gestärkt. Zum Beispiel stellt die vorliegende Erfindung kurzfristig nach Ausführung der Transaktion beispielsweise per Prüfinformationen (z.B. per Kontoauszug) eine belastbare positive Abwicklungsquittung zur Verfügung (z.B. ohne sich technisch oder juristisch anfechtbar in den Bezahlprozess einzuhängen und senkt damit signifikant das Ausfallrisiko).

Durch die vorliegende Erfindung kann eine 1 zu 1 Verknüpfung zwischen Auftrag und Zahlung abgebildet werden. Da die Ausführung der Transaktionen innerhalb kürzester Zeit positiv belastbar quittiert werden kann und entsprechende Zahlungseingänge verbucht werden können, werden die jeweiligen Verkaufsprozesse kurzfristig abgeschlossen und die Anzahl der "offenen Aufträge" verringert sich um ein Vielfaches. Hierdurch wird der Rechenaufwand für die Abwicklung der Verkaufsprozesse beispielsweise weiter verringert und beispielsweise gleichzeitig die Liquidität des Händlers/Verkäufers gestärkt.

Durch eine durchgängige DTA- und SEPA-Verarbeitung ermöglicht die vorliegende Erfindung den Händlern/Verkäufern als vorgeschaltetes System zur Bank zum Beispiel eine völlige Flexibilität zwischen den Verfahren. Die vorliegende Erfindung ist beispielsweise aufgrund Ihrer uneingeschränkten SEPA-Fähigkeit in sämtlichen SEPA-Ländern anwendbar. Auch ist die vorliegende Erfindung mit diversen Modulen zum Ratenkauf, mit Wiedervorlagemechanismen für Rücklastschriften, mit Dauerauftragsfunktionalitäten, Gebührenmodulen oder zur E-Geld-Verwendung usw. erweiterbar.

Die vorliegende Erfindung ermöglicht beispielsweise die Steuerung von Zahlungsströmen bzw. die Steuerung der Kommunikation in einem Transaktionssystem, wodurch die wesentlichen Erfolgsfaktoren für Bezahlverfahren wie Geschwindigkeit, Kosten, Ausfallrisiko und Integrationsfähigkeit optimierbar sind.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren, umfassend:
- Empfangen (401, 501) zumindest eines Teils von ersten Routinginformationen an einer Steuerungsvorrichtung (10), wobei die ersten Routinginformationen ein Sendekonto einer ersten Transaktion identifizieren, und wobei der empfangene Teil der ersten Routinginformationen mit einer ersten Entität (21) eines Transaktionssystems (2) assoziiert ist, und
- Bestimmen (402,502) von zweiten Routinginformationen derart zumindest teilweise in Abhängigkeit des empfangenen Teils der ersten Routinginformationen durch die Steuerungsvorrichtung (10), dass die zweiten Routinginformationen ebenfalls mit der ersten Entität (21) des Transaktionssystems (2) assoziiert sind, wobei die zweiten Routinginformationen ein Empfangskonto der ersten Transaktion identifizieren, und
- Bereitstellen (403, 503), durch die Steuerungsvorrichtung (10), der zweiten Routinginformationen zum Ausführen der ersten Transaktion.

2. Verfahren gemäß Anspruch 1, wobei das Bestimmen der zweiten Routinginformationen umfasst:
- Auswählen der zweiten Routinginformationen aus einer Mehrzahl von Routinginformationen.

3. Verfahren gemäß Anspruch 2, wobei die von den zweiten Routinginformationen verschiedenen weiteren Routinginformationen der Mehrzahl von Routinginformationen zumindest teilweise jeweils mit einer von der ersten Entität des Transaktionssystems verschiedenen weiteren Entität (22, 23) des Transaktionssystems (2) assoziiert sind.

4. Verfahren gemäß einem der Ansprüche 1 bis 3, wobei das Bereitstellen der zweiten Routinginformationen zum Ausführen der ersten Transaktion umfasst:
- Senden, durch die Steuerungsvorrichtung (10), der zweiten Routinginformationen an eine von der Steuerungsvorrichtung verschiedene Vorrichtung (30, 31).

5. Verfahren gemäß einem der Ansprüche 1 bis 4, wobei das Bereitstellen der zweiten Routinginformationen zum Ausführen der ersten Transaktion umfasst:
- Erstellen, durch die Steuerungsvorrichtung (10), von Transaktionsinformationen der ersten Transaktion zumindest teilweise in Abhängigkeit der zweiten Routinginformationen.

6. Verfahren gemäß einem der Ansprüche 1 bis 5, ferner umfassend:
- Prüfen (404, 504), durch die Steuerungsvorrichtung (10), ob die erste Transaktion ausgeführt wurde, und
- Bereitstellen (405) von ersten Zahlungsinformationen, ob die erste Transaktion ausgeführt wurde.

7. Verfahren gemäß einem der Ansprüche 1 bis 6, wobei die erste Transaktion eine Überweisung und/oder eine Lastschrift ist.

8. Verfahren gemäß einem der Ansprüche 1 bis 7, wobei die erste Entität (21) des Transaktionssystems (2) eingerichtet ist, die erste Transaktion zumindest teilweise auszuführen.

9. Verfahren gemäß einem der Ansprüche 1 bis 8, wobei die erste Entität (21) des Transaktionssystems (2) eine oder mehrere Servervorrichtungen umfasst.

10. Verfahren gemäß einem der Ansprüche 1 bis 9, wobei die ersten Routinginformationen und/oder die zweiten Routinginformationen eine Bankidentifizierungsinformation und/oder eine Kontoidentifizierungsinformation umfassen.

11. Verfahren gemäß einem der Ansprüche 1 bis 10, ferner umfassend:
- Bestimmen von dritten Routinginformationen (505) in Abhängigkeit von vierten Routinginformationen durch die Steuerungsvorrichtung (10), wobei die vierten Routinginformationen mit einer zweiten Entität (22) des Transaktionssystems (2) assoziiert sind, wobei die vierten Routinginformationen ein Empfangskonto einer zweiten Transaktion identifizieren, und wobei die dritten Routinginformationen derart bestimmt werden, dass die dritten Routinginformationen ebenfalls mit der zweiten Entität (22) des Transaktionssystems (2) assoziiert sind, wobei die dritten Routinginformationen ein Sendekonto der zweiten Transaktion identifizieren, und
- Bereitstellen (506), durch die Steuerungsvorrichtung (10), der dritten Routinginformationen zum Ausführen der zweiten Transaktion.

12. Verfahren gemäß Anspruch 11, ferner umfassend:
- Prüfen (507), durch die Steuerungsvorrichtung (10), ob die zweite Transaktion ausgeführt wurde, und
- Bereitstellen (508) von zweiten Zahlungsinformationen, ob die zweite Transaktion ausgeführt wurde.

13. Steuerungsvorrichtung, umfassend ein oder mehrere Mittel (100-130) eingerichtet zur Ausführung des Verfahrens nach einem der Ansprüche 1 bis 12 oder umfassend jeweilige Mittel (100-130) zur Ausführung der Schritte des Verfahrens nach einem der Ansprüche 1 bis 12.

14. Computerprogramm, umfassend Programmanweisungen, die einen Prozessor zur Ausführung und/oder Steuerung des Verfahrens gemäß einem der Ansprüche 1 bis 12 veranlassen, wenn das Computerprogramm auf dem Prozessor läuft.

15. System, umfassend:
- eine Steuerungsvorrichtung (10) gemäß Anspruch 13, und
- eine erste Entität (21) eines Transaktionssystems (2).
